# EUROPÄISCHE PATENTSCHRIFT

(11) **EP 3 817 406 B1**
(45) Veröffentlichungstag und Bekanntmachung des Hinweises auf die Patenterteilung: **07.09.2022**
(21) Anmeldenummer: 20202307.3
(22) Anmeldetag: 16.10.2020
(51) Int. Cl.: H04W 4/021, G06Q 20/32, G06Q 10/02, G06Q 50/30

(54) **VERFAHREN ZUM BETREIBEN EINER AUF EINEM MOBILEN ENDGERÄT INSTALLIERTEN DIENSTLEISTUNGSANWENDUNG**
METHOD FOR OPERATING A SERVICE APPLICATION INSTALLED ON A MOBILE TERMINAL DEVICE
PROCÉDÉ DE FONCTIONNEMENT D'UNE APPLICATION DE SERVICE INSTALLÉE SUR UN DISPOSITIF TERMINAL MOBILE

(30) Priorität: 04.11.2019 DE 102019129631
(43) Veröffentlichungstag der Anmeldung: 05.05.2021
(73) Patentinhaber: Scheidt & Bachmann GmbH, 41238 Mönchengladbach (DE)
(72) Erfinder: POMP, Georg, 41239 Mönchengladbach (DE); MILLER, Dr. Norbert, 41063 Mönchengladbach (DE)
(74) Vertreter: Cohausz & Florack

(56) Entgegenhaltungen:
- US-A1- 2018 211 188
- US-A1- 2019 303 970

## Beschreibung

Die Anmeldung betrifft ein Verfahren zum Betreiben einer auf einem mobilen Endgerät eines Nutzers installierten Dienstleistungsanwendung für die Inanspruchnahme einer Dienstleistung, insbesondere einer Transportdienstleistung. Darüber hinaus betrifft die Anmeldung eine Dienstleistungsanwendung, ein mobiles Endgerät und ein Dienstleistungssystem.

Für die Inanspruchnahme einer bestimmten Dienstleistung durch einen Nutzer kann eine Nutzerberechtigung erforderlich sein. Eine derartige Dienstleistung umfasst vorliegend insbesondere eine Transportdienstleistung, beispielsweise die Nutzung einer Transportvorrichtung, insbesondere eines Fahrzeugs (z.B. Bus, Bahn, Flugzeug, Wasserfahrzeug etc.), aber auch andere Dienstleistungen, wie eine Teilnahme an einer bestimmten Veranstaltung (z.B. Konzert, Theateraufführung, Sportveranstaltung etc.).

Um bei Dienstleistungssystemen, beispielsweise in Form eines Transportsystems, auf konventionelle Weise eine Nutzerberechtigung für die Nutzung einer Transportdienstleistung zu erwerben, kann ein Nutzer, typischerweise vor der Nutzung, die Nutzerberechtigung beispielsweise durch Kauf eines Tickets erhalten. Beispielhafte und nicht abschließende Nutzerberechtigungen bei Transportsystemen sind Einzel- oder Mehrfachfahrtickets, sowie Zeitfahrkarten, wie beispielsweise Tages-, Wochen- oder Monatstickets.

In der heutigen Zeit werden vermehrt Dienstleistungssysteme für Transportdienstleistungen, aber auch für oben genannte Veranstaltungsdienstleistungen, eingesetzt, in denen elektronische Nutzerberechtigungen erworben und bereitgestellt werden. Hierzu kann eine Nutzerberechtigung in Form eines elektronischen Tickets auf ein mobiles Endgerät des Nutzers übertragen werden. Dieses kann dann von dem Nutzer an einer Zugangskontrolle, wie z.B. an einer Durchgangssperre, präsentiert werden und/oder von einem Kontrolleur, beispielsweise unter Nutzung einer mobilen Inspektionsvorrichtung, überprüft werden.

Beispielsweise kann ein gespeichertes elektronisches Ticket durch ein grafisches Anzeigemodul auf dem mobilen Endgerät angezeigt werden in Form eines optischen Codes (z.B. Barcode oder QR-Code), der von der Inspektionsvorrichtung drahtlos ausgelesen werden kann. Auch kann das gespeicherte Ticket in einem Datenspeicher des mobilen Endgeräts gespeichert sein und z.B. über eine Funkkommunikation (z.B. Bluetooth, Wibree, WiMAX, ZigBee, WLAN oder NFC) auslesbar sein. Insbesondere kann hierdurch ein Ticketdatensatz ausgelesen und, durch die Inspektionsvorrichtung, mit zulässigen Referenzticketdatensätzen verglichen werden, um festzustellen, ob der Nutzer zur Inanspruchnahme einer augenblicklichen Transportdienstleistung berechtigt ist (berechtigen beispielsweise die ausgelesenen Ticketdaten den Nutzer, die vorliegende Transportvorrichtung in der vorliegenden Klasse zu verwenden?). Der Ausleseprozess sowie der Abgleich der Daten ist jedoch mit einem erheblichen Zeitaufwand verbunden und reduziert zudem den Nutzerkomfort.

Aus dem Stand der Technik sind ferner "ticketlose" Transportsysteme bekannt, auch Raumerfassungssysteme genannt, bei denen die Nutzung einer Transportdienstleistung durch geeignete Erfassungsmittel, die in dem nutzbaren Dienstleistungsraum (beispielsweise ein Fahrzeug) installiert sind, erfasst und entsprechend abgerechnet wird. Insbesondere kann bei einem derartigen Transportsystem der Erwerb der Nutzerberechtigung in Form eines Tickets vor der Nutzung entfallen. Auch ist es möglich, dass zuvor erworbene Fahrtberechtigungen in Raumerfassungssystemen genutzt und die Gültigkeit dieser Fahrtberechtigungen kontrolliert werden hinsichtlich der genutzten Verkehrsmittel, der gefahrenen Strecke oder auch des Zeitpunktes der Nutzung.

In der Regel ist es bei einem derartigen Transportsystem zunächst erforderlich, dass der Nutzer sich bei diesem System vor der erstmaligen Nutzung einer Transportdienstleistung registriert. Bei einer erfolgreichen Registrierung wird in dem Transportsystem, insbesondere einem Hintergrundsystem des Transportsystems (auch Backendsystem genannt), ein Nutzerkonto für den registrierten Nutzer angelegt, indem Identifikationsdaten, wie eine eindeutige Nutzerkennung (ID) des Nutzers, Authentisierungsdaten, z.B. ein Passwort, und Abrechnungsdaten, z.B. Kreditkartendaten oder Kontoverbindungen, Adressdaten oder sonstige Daten für die Abrechnung, in dem Hintergrundsystem gespeichert werden. In Gesamtheit werden diese Daten Nutzerstammdaten genannt. Zudem wird in der Regel auf dem mobilen Endgerät des registrierten Nutzers eine Dienstleistungsanwendung in Form einer so genannten App installiert.

Für die legitime Nutzung einer Transportdienstleistung führt der registrierte Nutzer sein mobiles Endgerät mit der Dienstleistungsanwendung (App) mit sich, wobei die App auf dem Endgerät aktiviert ist und (typischerweise beim erstmaligen Aktivieren) mit dem registrierten Nutzer datentechnisch verknüpft wird; dazu identifiziert sich der Nutzer mit den Identifikations- und Authentisierungsdaten, die im Nutzerkonto hinterlegt sind. Damit ist die genau eine, auf dem verwendeten Endgerät installierte Dienstleistungsanwendung dem entsprechenden Nutzerkonto zugeordnet, und alle mit diesem Endgerät erfassten Dienstleistungsnutzungen werden mit dem entsprechenden Nutzerkonto verrechnet. Die von dem Nutzer zu verwendende Transportvorrichtung weist eine Erfassungseinrichtung mit einem Kommunikationsmodul auf, um die Anwesenheit des mobilen Endgeräts in der Transportvorrichtung zu erfassen. Beispielsweise können hierfür Anwesenheitsnachrichten zwischen dem mobilen Endgerät und der Erfassungseinrichtung ausgetauscht werden.

Derartige Dienstleistungssysteme erfordern, dass insbesondere jede Transportvorrichtung mit mindestens einer Erfassungseinrichtung und mindestens einem Kommunikationsmodul ausgestattet ist. In der Regel wird eine Vielzahl von Erfassungseinrichtungen benötigt. Da insbesondere die Nachrüstung von Transportvorrichtungen und ähnlichen Dienstleistungsräumen mit einem hohen Aufwand und entsprechenden Kosten verbunden ist, werden die genannten Dienstleistungssysteme gemäß dem Stand der Technik dahingehend weiterentwickelt, dass auf eine entsprechende Erfassungs- und Kommunikationsinfrastruktur in dem Dienstleistungsraum, in dem für eine Anwesenheit eine Nutzerberechtigung erforderlich ist, verzichtet werden kann.

Bei solchen Dienstleistungssystemen übernimmt die Erfassung und Aufzeichnung bzw. Protokollierung die auf dem mobilen Endgerät installierte Dienstleistungsanwendung (insbesondere eine Dienstleistungsanwendung in Form einer durch einen Prozessor des mobilen Endgeräts ausführbaren Softwareanwendung). Im Fall einer Transportdienstleistung bedeutet dies beispielsweise die Protokollierung der durchgeführten Transportdienstleistung, insbesondere der durch einen Nutzer durchgeführten Fahrtenkette, d.h. die Nutzung mehrerer Transportmittel (z.B. Bus- / Bahnfahrten mit Umsteigevorgängen).

Eine derartige Dienstleistungsanwendung ist insbesondere eingerichtet zum Detektieren, ob sich das mobile Endgerät in einem Dienstleistungsraum befindet, in dem eine Nutzerberechtigung erforderlich ist. Wenn detektiert wird, dass sich das mobile Endgerät in einem Dienstleistungsraum befindet, kann die Dienstleistungsanwendung in einen Basis-Nutzungszustand gesetzt werden, auch "System-Be-In"-Zustand genannt.

Beispielweise kann bei einem so genannten CIBO System (Check-In-Be-Out System) die Dienstleistungsanwendung durch einen manuellen Eincheckvorgang (beispielweise durch Betätigen einer Nutzerschnittstelle des mobilen Endgeräts, wie ein Touchdisplay) vorbereitet werden, den Basisnutzungszustand anzunehmen: Zu diesem Zweck versetzt der manuelle Eincheckvorgang die Dienstleistungsanwendung dabei zunächst in einen "System-Check-In"-Zustand. Im "System Check-In"-Zustand nimmt die Dienstleistungsanwendung durch ein automatisiertes Feststellen, dass vorgegebene Basis-Nutzungsreferenzkriterien erfüllt sind, den Basis-Nutzungszustand an ("System Be-In"). Die Dienstleistungsanwendung kann regelmäßig erneut bestimmen, ob der Basis-Nutzungszustand noch vorliegt oder das mobile Endgerät den genannten (insbesondere zahlungspflichtigen) Dienstleistungsraum verlassen hat. In diesem Fall kann die Dienstleistungsanwendung wieder in einen Nicht-Nutzungszustand versetzt werden, auch "System-Be-Out" Zustand genannt.

Um die Nutzung der Dienstleistung insbesondere für Abrechnungszwecke zu protokollieren und/oder um ein Verlassen des Dienstleistungsraums zu erfassen, ist es aus dem Stand der Technik bekannt, dass die Dienstleistungsanwendung mindestens einen Nutzungsdatensatz (nahezu kontinuierlich) erhält und diesen (nahezu kontinuierlich) auswertet. Insbesondere kann eine Mehrzahl von Nutzungsdatensätzen der Dienstleistungsanwendung von Sensorelementen des mobilen Endgeräts bereitgestellt werden, wie Positionsdaten (z.B. GPS-Daten, Mobilfunkdaten, Beschleunigungs- und/oder Geschwindigkeitsdaten etc.).

Die Dienstleistungsanwendung kann den mindestens einen erhaltenen Sensordatensatz auswerten, beispielsweise durch ein Vergleichen des mindestens einen Sensordatums mit einem zugehörigen und vorgegebenen Basis-Nutzungsreferenzkriterium. Wenn das mindestens eine Sensordatum (z.B. GPS-Koordinaten) das zugehörige Basis-Nutzungsreferenzkriterium (z.B. bestimmtes durch GPS-Koordinaten abgegrenztes Gebiet) erfüllt, dann geht die Dienstleistungsanwendung des Endgeräts davon aus, dass sich der Nutzer weiterhin in dem Dienstleistungsraum befindet. Ansonsten wird davon ausgegangen, dass das mobile Endgerät und damit der Nutzer den Dienstleistungsraum verlassen haben.

Problematisch bei den bekannten Dienstleistungssystemen ohne eine Erfassungseinrichtung in dem Dienstleistungsraum ist, dass diese bisher nicht mit ausreichender Zuverlässigkeit betrieben werden können. So hat sich bei Praxistests gezeigt, dass es bei der Auswertung der Sensordaten zu falschen Ergebnissen kommen kann. Insbesondere in geographischen Gebieten (z.B. unterirdisch gelegene Bereiche, wie Tunnel, U-Bahnstationen oder dergleichen), in denen eine Positionsbestimmung mit dem mindestens einen Positionssensor (temporär) nicht möglich ist und/oder Mobilfunksignale aufgrund einer unzureichenden Netzabdeckung (temporär) nicht (mit ausreichender Signalstärke) anliegen, kommt es immer wieder zu falschen Auswerteergebnissen. Beispielsweise wird von der Dienstleistungsanwendung ein Verlassen des Dienstleistungsraums festgestellt (obwohl sich der Nutzer noch in dem Dienstleistungsraum befindet) und/oder die Dienstleistungsanwendung generiert ein Nutzungsprotokoll, das jedoch für eine Abrechnung nicht ausreichend genau ist und insbesondere keine exakte Rekonstruktion einer durchgeführten Fahrtenkette ermöglicht.

Darüber hinaus offenbart die Druckschrift US 2018/211188 A1 Systeme und Verfahren, bei dem eine Benutzeranwendung auf einem mobilen Gerät die freihändige Fahrpreisvalidierung und den gatefreien Ein- und Ausstieg in eine Transiteinrichtung, wie einer Transitstation oder einem Transitfahrzeug ermöglicht. Die Benutzeranwendung der US 2018/211188 A1 kommuniziert mit einem Bluetooth-Gateway, um das Gerät zu authentifizieren und stellt gerätespezifische Informationen zur Geräteidentifikation und Standortbestimmung bereit, wobei die Benutzeranwendung außerdem ein sicheres Token an das Gateway sendet, um ein im Gerät gespeichertes elektronisches Ticket zu validieren. Eine Positionierungseinheit verwendet die gerätespezifischen Informationen, um zeitgestempelte Standortdaten für das Gerät zu erzeugen. Eine Kamera überwacht die Bewegung des Gerätebenutzers und erzeugt weitere zeitgestempelte Standortdaten für das Gerät. Ein Controller-Treiber vergleicht die beiden zeitgestempelten Standortdaten, um festzustellen, dass sich der Benutzer des Geräts einem torlosen Zugangspunkt nähert, und erlaubt dem Benutzer, einen Transitdienst durch den torlosen Zugangspunkt in Anspruch zu nehmen, wenn das elektronische Ticket gültig und aktiv ist.

Die Druckschrift US 2019/303970 A1 betrifft virtuelle Teleportationssysteme und - verfahren, wobei ein Identifikations-, Standort- und Authentifizierungssystem vorgesehen sind, das mit einem physischen Veranstaltungsort verbunden ist und einen Master-Sensorknoten und eine Vielzahl von Sensoren umfasst. Eine auf einem mobilen Gerät installierte Anwendung der US2019/303970 A1 bestimmt einen ersten Satz von Koordinaten, die dem Standort des mobilen Geräts entsprechen, überträgt eine erste Suchanfrage für einen Dienst, empfängt und zeigt eine Liste von Diensten an, die den physischen Veranstaltungsort, der mit dem Master-Sensorknoten verbunden ist, und den physischen Veranstaltungsort, der einen Teleportationsindikator enthält, einschließt, und empfängt eine Anzeige, dass der Teleportationsindikator ausgewählt ist.

Daher liegt der Anmeldung die Aufgabe zugrunde, ein Verfahren zum Betreiben einer auf einem mobilen Endgerät installierten Dienstleistungsanwendung für die Inanspruchnahme einer Dienstleistung, insbesondere einer Transportdienstleistung, bereitzustellen, welche die Zuverlässigkeit des Betriebs erhöht und insbesondere in sicherer Weise eine Erkennung der Änderung von Nutzungszuständen, z.B. das Betreten/Verlassen eines Dienstleistungsraums, ermöglicht.

Die Aufgabe wird gemäß einem ersten Aspekt der Anmeldung gelöst durch ein Verfahren nach Anspruch 1 zum Betreiben einer auf einem mobilen Endgerät installierten Dienstleistungsanwendung für die Inanspruchnahme einer Dienstleistung, insbesondere einer Transportdienstleistung. Das Verfahren umfasst:
- Erhalten, durch ein Empfangsmodul der Dienstleistungsanwendung, mindestens eines Nutzungsdatensatzes,
- Bestimmen, in einem Basis-Nutzungszustand der Dienstleistungsanwendung, durch ein Verifizierungsmodul der Dienstleistungsanwendung, eines verifizierten Nutzungszustands, basierend auf dem mindestens einen erhaltenen Nutzungsdatensatz und mindestens einem vorgegebenen Verifizierungsreferenzkriterium, und
- wenn ein verifizierter Nutzungszustand bestimmt wurde, Bewirken, durch ein erstes Sendemodul der Dienstleistungsanwendung, eines Aussendens, durch das mobile Endgerät, eines Advertising-Signals mit einer Advertising-Nachricht, wobei die Advertising-Nachricht anzeigt, dass die Dienstleistungsanwendung einen verifizierten Nutzungszustand bestimmt hat.

Indem im Gegensatz zum Stand der Technik anmeldungsgemäß ein Verfahren bereitgestellt wird, bei dem das mobile Endgerät aktiv ein Advertising-Signal aussendet, wenn durch die installierte Dienstleistungsanwendung mit ausreichender Sicherheit verifiziert wird, dass sich das mobile Endgerät (tatsächlich) in einem Dienstleistungsraum befindet, also ein verifizierter Nutzungszustand bestimmt wurde, wird die Zuverlässigkeit des Betriebs signifikant erhöht. Insbesondere kann das ausgesendete Advertising-Signal von in Reichweite des Advertising-Signals befindlichen weiteren mobilen Endgeräten empfangen und von diesen weiteren mobilen Endgeräten berücksichtigt werden zumindest bei der Detektion, ob sie sich in einem Dienstleistungsraum befinden (oder nicht). Auch wenn beispielsweise (augenblicklich) keine geographischen Positionsdaten erhalten werden und/oder (augenblicklich) kein Mobilfunksignal an einer Mobilfunkschnittstelle eines weiteren mobilen Endgeräts anliegt, kann durch ein von einem ersten mobilen Endgerät empfangenes Advertising-Signal in ausreichend sicherer Weise festgestellt werden, ob sich das weitere mobile Endgerät in einem Dienstleistungsraum befindet (oder nicht).

Das anmeldungsgemäße Verfahren kann insbesondere in einem Dienstleistungssystem verwendet werden, vorzugsweise in Form eines Transportsystems. Das Dienstleistungssystem kann gemäß dem BIBO-Verfahren (so genanntes Be-In-Be-Out-Verfahren), CIBO-Verfahren (sogenanntes Check-In-Be-Out-Verfahren) und/oder CICO-Verfahren (Check-In-Check-Out-Verfahren) betrieben werden. In dem Dienstleistungssystem kann mindestens ein Dienstleistungsraum ohne eigene Erfassungseinrichtung (oder nur mit einer Erfassungseinrichtung mit beschränkter Funktionalität) vorhanden sein.

Ein Dienstleistungsraum ist vorliegend insbesondere ein begrenzter (z.B. beweglicher) Bereich, wobei für eine zulässige Anwesenheit in diesem Bereich eine Nutzerberechtigung (vorliegend insbesondere eine registrierte und aktivierte Dienstleistungsanwendung) erforderlich ist. Insbesondere kann es sich bei dem Dienstleistungsraum um eine Transportvorrichtung handeln, beispielsweise ein Transportfahrzeug (z.B. Bus, Bahn, Flugzeug, Wasserfahrzeug etc.). Ein Dienstleistungsraum kann aber auch ein unbeweglicher Raum sein, wie eine abgegrenzte Transportstation, wie eine U-Bahn-Station, Straßenbahn-Station, Flughafen, Hafen etc., oder ein abgegrenzter Veranstaltungsbereich, wie eine Konzerthalle, ein Fußballstadion etc.

Das anmeldungsgemäße Verfahren dient insbesondere zum Betreiben einer Dienstleistungsanwendung, die vorzugsweise in Form einer Softwareanwendung (auch "App" genannt) auf einem mobilen Endgerät installiert sein kann. Insbesondere kann die Softwareanwendung Computercode umfassen, der von einem Prozessor des mobilen Endgeräts ausführbar ist. Die Dienstleistungsanwendung ist insbesondere für eine ordnungsgemäße Inanspruchnahme einer Dienstleistung erforderlich, insbesondere für eine Protokollierung der in Anspruch genommenen Dienstleistung.

Die (aktivierte) Dienstleistungsanwendung kann mindestens einen Nutzungsdatensatz erhalten. Insbesondere kann das mobile Endgerät einem Empfangsmodul (insbesondere ein Softwaremodul) den mindestens einen Nutzungsdatensatz bereitstellen. Ein Nutzungsdatensatz beinhaltet anmeldungsgemäß insbesondere eine Information bzw. Angabe, die es der Dienstleistungsanwendung ermöglichen kann, festzustellen, ob sich das mobile Endgerät (noch) in einem Dienstleistungsraum befindet oder nicht. Vorzugsweise kann das mindestens eine Empfangsmodul eine Mehrzahl von (unterschiedlichen) Nutzungsdatensätzen (nahezu kontinuierlich) erhalten.

Der mindestens eine Nutzungsdatensatz kann von einem Verifizierungsmodul (insbesondere ein Softwaremodul) der Dienstleistungsanwendung weiterverarbeitet werden. Das Verifizierungsmodul kann insbesondere in einem Basis-Nutzungszustand der Dienstleistungsanwendung ausgeführt werden. Die Dienstleistungsanwendung ist insbesondere dann in einem Basis-Nutzungszustand, wenn (durch ein Detektionsmodul der Dienstleistungsanwendung bereits) festgestellt wurde, dass sich das mobile Endgerät zumindest mit einer ersten Zuverlässigkeitsstufe in einem Dienstleistungsraum befindet.

Anmeldungsgemäß ist mindestens ein Verifizierungsreferenzkriterium vorgegeben, beispielsweise in einem Datenspeicher des mobilen Endgeräts gespeichert. Vorzugsweise können für unterschiedliche Nutzungsdaten unterschiedliche und jeweils zugehörige Verifizierungsreferenzkriterien vorgesehen sein, beispielweise in Form von mindestens einem Verifizierungsreferenzprofil. Hierbei können eine Mehrzahl von Verifizierungsreferenzprofilen vorgesehen sein, bei denen beispielsweise berücksichtigt wird, dass eine erste Bedingung für ein erstes Nutzungsdatum geringer sein kann, wenn gleichzeitig eine weitere höhere Bedingung durch ein weiteres Nutzungsdatum erfüllt wird (und umgekehrt).

Das mindestens eine Verifizierungsreferenzkriterium stellt vorliegend insbesondere eine Bedingung dar, bei der mit einer zweiten Zuverlässigkeitsstufe festgestellt wird, dass sich das mobile Endgerät in einem Dienstleistungsraum befindet, wobei die zweite Zuverlässigkeitsstufe höher ist als die erste Zuverlässigkeitsstufe. Hiermit ist insbesondere gemeint, dass ein Überschreiten eines ersten Grenzwerts X durch die Werte der Nutzungsdaten ausreicht, um die Dienstleistungsanwendung in den Basis-Nutzungszustand zu setzen, während für den verifizierten Nutzungszustand das Erreichen eines (höheren) zweiten Grenzwerts Y erforderlich ist, um die Dienstleistungsanwendung in den verifizierten Nutzungszustand zu versetzen. Das mindestens eine vorgegebene Verifizierungsreferenzkriterium ist so gewählt, dass ein verifizierter Nutzungszustand nur dann gegeben ist, wenn festgestellt wird, dass der mindestens eine erhaltene Nutzungsdatensatz das Verifizierungsreferenzkriterium erfüllt.

Wenn durch das Verifizierungsmodul ein verifizierter Nutzungszustand festgestellt wird, dann kann die Dienstleistungsanwendung in diesen verifizierten Nutzungszustand gesetzt werden und insbesondere dem ersten Sendemodul eine entsprechende Information bereitstellen. Bei einem verifizierten Nutzungszustand erfolgt anmeldungsgemäß ein Aussenden eines Advertising-Signals durch das mobile Endgerät. Insbesondere kann das erste Sendemodul insbesondere eine Nahbereichsschnittstelle des mobilen Endgeräts derart ansteuern, dass ein Advertising-Signal ausgesendet wird.

Insbesondere kann das Advertising-Signal vorzugsweise (nahezu) kontinuierlich, beispielsweise alle x Sekunden ausgesendet werden, sofern sich weiterhin ein verifizierter Nutzungszustand festgestellt wird.

Unter einem Advertising-Signal ist vorliegend insbesondere ein Signal mit einem digitalen Dateninhalt zu verstehen, welches von einem ersten mobilen Endgerät ausgesendet werden kann und von wenigstens einem weiteren mobilen Endgerät empfangbar ist und dessen digitaler Dateninhalt insbesondere von dem wenigstens einen weiteren mobilen Endgerät auswertbar ist, ohne dass eine (dauerhafte) Kopplung zwischen den genannten Geräten erforderlich ist. Insbesondere kann auf mindestens einem von beispielsweise einer Mehrzahl von Advertising-Kanälen einer bestimmten Übertragungstechnologie ein Advertising-Signal vorzugsweise in regelmäßigen Zeitabständen ausgesendet werden.

Im Stand der Technik wird ein Advertising-Signal eingesetzt, um eine dauerhafte Kommunikationsverbindung zwischen zwei mobilen Endgeräten herzustellen. Insbesondere wird ein Advertising-Signal verwendet für den ersten Kontakt zwischen den Geräten, insbesondere um die Anwesenheit und die grundsätzliche Bereitschaft eines Endgeräts für eine Kopplung einem weiteren (evtl. in Reichweite befindlichem) Gerät anzuzeigen. Nach Herstellung des ersten Kontakts wird anschließend auf einen anderen Kanal mit einer höheren Datenrate gewechselt, wenn eine dauerhafte Kommunikationsverbindung gewünscht ist. Die Daten werden dann nicht über Advertising-Signale ausgetauscht.

Anmeldungsgemäß ist erkannt worden, dass ein Advertising-Signal vorteilhaft zur Übertragung einer Advertising-Nachricht verwendet werden kann, da ein solches Signal stets von einem weiteren mobilen Endgerät empfangbar und sein Dateninhalt auswertbar ist (sofern die entsprechende Schnittstelle des weiteren mobilen Endgeräts aktiviert ist). Hierdurch kann in einfacher Weise sichergestellt werden, dass mindestens ein weiteres (sich in Reichweite befindliches) mobiles Endgerät darüber informiert werden kann, dass es sich (augenblicklich) in einem Dienstleistungsraum befindet.

Insbesondere ist anmeldungsgemäß vorgesehen, dass nur dann ein aktives Aussenden eines anmeldungsgemäßen Advertising-Signals durch ein mobiles Endgerät erfolgt, wenn mit einer vorgegebenen hinreichenden Sicherheit (insbesondere die genannte zweite Zuverlässigkeitsstufe) durch die Dienstleistungsanwendung festgestellt wird, dass sich das mobile Endgerät (noch) in dem Dienstleistungsraum befindet.

Die Advertising-Nachricht kann beispielweise einen Advertising-Datensatz aufweisen, der mindestens eine Information/Angabe (z.B. einen entsprechenden Nutzungsdatensatz) enthält, die angibt, dass sich die Dienstleistungsanwendung, die die Aussendung bewirkt hat, in einem verifizierten Nutzungszustand befindet (sich also hinreichend sicher ist, dass sich das mobile Endgerät in einem Dienstleistungsraum befindet).

Gemäß einer ersten bevorzugten Ausführungsform des anmeldungsgemäßen Verfahrens kann das Advertising-Signal ein Bluetooth Low Energy (BLE) Signal sein. Ein BLE-Advertising-Signal kann insbesondere von nahezu jedem mobilen Endgerät, insbesondere mit einem marktüblichen Betriebssystem (z.B. Apple iOS, Google Android, Microsoft Windows Mobile, Microsoft Mobile Phone, Blackberry OS, Symbian OS, Firefox OS, Tizen, Aliyun OS), empfang- und auswertbar sein. Zudem weist die Bluetooth-Technologie den Vorteil auf, dass die Reichweite (z.B. auf ca. 10 m) begrenzt ist, so dass mit einer hohen Sicherheit ein Advertising-Signal nur von mobilen Endgeräten empfangen wird, die sich ebenfalls in dem Dienstleistungsraum befinden.

Bei anderen Varianten der Anmeldung kann das mindestens eine Advertising-Signal auch ein WLAN-Advertising-Signal, RFID-Advertising-Signal oder dergleichen sein. Es versteht sich, dass bei einer Variante auch zwei oder mehr unterschiedliche Advertising-Signale durch ein mobiles Endgerät ausgesendet werden können.

Gemäß einer weiteren Ausführungsform des anmeldungsgemäßen Verfahrens kann die Advertising-Nachricht (insbesondere eines BLE-Advertising-Signals) zumindest eines der folgenden Advertising-Daten umfassen:
- mindestens eine Nutzerkennung,
- mindestens eine Dienstleistungsbetreiberkennung,
- mindestens einen Zeitstempel,
- mindestens eine Sequenznummer,
- mindestens ein historisches Datum des Advertising-Signals,
- mindestens ein Sensorflag, kennzeichnend mindestens ein Sensorelement des das Advertising-Signal aussendenden mobilen Endgeräts,
- eine von einem Backendsystem und/oder einer Inspektionsvorrichtung verifizierte Nutzungsinformation.

Eine Nutzerkennung kann insbesondere (systemweit) (ein-)eindeutig einem (registrierten) Nutzer der Dienstleistungsanwendung des mobilen Endgeräts (mittelbar oder unmittelbar) zugeordnet sein. Beispielhafte und nicht abschließende Nutzerkennungen sind eine (numerische oder alphanumerische) User-ID, Nutzername, Vertragsnummer des Nutzers, Kennung des mobilen Endgeräts (z.B. IMEI), Produktnummer der Dienstleistungsanwendung etc.

Eine Dienstleistungsbetreiberkennung ist insbesondere eindeutig dem Erbringer der in Anspruch genommenen Dienstleistung, wie eine bestimmte Dienstleistung in mindestens einem Dienstleistungsraum, zugeordnet. Anders ausgedrückt, kann es sich beispielsweise um eine Kennung handeln, die eindeutig den Transportdienstleister identifiziert.

Darüber hinaus kann die Advertising-Nachricht vorzugsweise mindestens einen Zeitstempel (z.B. Kalenderdatum und Zeitangabe) aufweisen. Vorteilhafterweise kann ein Start-Zeitstempel vorhanden sein, der die erstmalige Aussendung der Advertising-Nachricht angibt. Wenn es sich um eine weitergeleitete Advertising-Nachricht handelt (nachstehend näher erläutert), kann insbesondere ein originaler Zeitstempel vorhanden sein, der den Aussendezeitpunkt des originalen bzw. ursprünglichen Advertising-Signals angibt.

Ferner kann alternativ oder vorzugsweise zusätzlich mindestens eine Sequenznummer in der Advertising-Nachricht enthalten sein. Eine Sequenznummer meint insbesondere eine Nummer des sendenden mobilen Endgeräts, die bei jeder Kommunikation zwischen der Dienstleistungsanwendung und dem Backendsystem (z.B.in definierten, regelmäßigen Zeitintervallen) inkrementiert wird. Diese kann beispielsweise von einer die Advertising-Nachricht erhaltenden Dienstleistungsanwendung ausgewertet werden.

Darüber hinaus kann alternativ oder vorzugsweise zusätzlich mindestens ein Sensorflag zu mindestens einem Sensorelement des das Advertising-Signal aussendenden mobilen Endgeräts in der Advertising-Nachricht enthalten sein. Eine Sensorflag kann insbesondere eine Information/Angabe sein, die für ein Sensorelement kennzeichnet, ob ein bestimmtes detektiertes Sensordatum (ein Sensorwert) über einem zugehörigen Sensorgrenzwert liegt oder nicht. Dies kann in der Advertising-Nachricht insbesondere durch Setzen/Nicht-Setzen eines Sensorflags (0 oder 1) erfolgen. Beispielsweise kann die Advertising-Nachricht zumindest eines der nachfolgenden Sensorflags enthalten:

| | |
|---|---|
| - GPS (oder dergleichen): | 0/1 |
| - Geschwindigkeit: | 0/1 |
| - Bluetooth | 0/1 |
| - WLAN | 0/1 |
| - GSM (oder dergleichen) | 0/1 |
| - Beschleunigung | 0/1 |
| - Bewegung | 0/1 |
| - Advertising-Signal | 0/1 |

Wenn beispielsweise ein GPS-Signal anliegt, kann eine 1 gesetzt werden, und wenn kein GPS-Signal gemessen werden kann, eine 0. Ein weiteres Beispiel ist die GSM-Signalstärke. Wenn die gemessene GSM-Signalstärke einen bestimmten Sensorgrenzwert übersteigt, kann eine 1 gesetzt werden, ansonsten eine 0. In entsprechender Weise können für die weiteren beispielhaft genannten Sensorflags eine 1 oder eine 0 gesetzt werden.

Alternativ oder zusätzlich kann in der Advertising-Nachricht eine von einem Backendsystem und/oder einer Inspektionsvorrichtung verifizierte Nutzungsinformation enthalten sein. Beispielsweise kann ein mobiles Endgerät, insbesondere zumindest teilweise gesteuert durch die installierte Dienstleistungsanwendung, Daten mit dem Backendsystem zumindest während der Nutzung der Dienstleistung bzw. während der Anwesenheit in einem Dienstleistungsraum austauschen. Das Backendsystem kann beispielsweise eine Nachricht an ein mobiles Endgerät übertragen, in der die Anwesenheit des mobilen Endgeräts in einem Dienstleistungsraum bestätigt wird.

Auch kann im Rahmen einer Berechtigungskontrolle (z.B. Fahrkartenkontrolle) eine mobile Inspektionsvorrichtung (eines Fahrkarteninspektors) mit dem mobilen Endgerät und insbesondere der installierten Dienstleistungsanwendung Daten austauschen, insbesondere um die Berechtigung des Nutzers zur Inanspruchnahme der Dienstleistung zu prüfen. Vorzugsweise kann der mindestens eine generierte Nutzungsprotokolldatensatz (wird nachfolgend näher erläutert) von der Inspektionsvorrichtung überprüft werden.

Im Rahmen der Kommunikation während eines Inspektionsvorgangs kann eine Inspektionsvorrichtung beispielsweise eine Nachricht an ein mobiles Endgerät übertragen, in der die Anwesenheit des mobilen Endgeräts in einem Dienstleistungsraum bestätigt wird (beispielsweise nach einem positiven Inspektionsergebnis). Auch kann es möglich sein, dass die Dienstleistungsanwendung aus einer durchgeführten Kontrolle eigeständig ableitet, dass sich das mobile Endgerät augenblicklich in einem Dienstleistungsraum befindet.

Liegt eine derartige bestätigtet bzw. verifizierte Nutzerberechtigungsinformation vor, kann diese vorteilhafterweise dem zu übertragenen Dateninhalt (z.B. in Form eines Advertising-Datensatzes) einer Advertising-Nachricht hinzugefügt werden.

Gemäß einer weiteren Ausführungsform des anmeldungsgemäßen Verfahrens kann das Verfahren (ferner) umfassen:
- Detektieren, durch ein Detektionsmodul der Dienstleistungsanwendung, einer Anwesenheit des mobilen Endgeräts in einem Dienstleistungsraum in einem Detektionsschritt, und
- Setzen der Dienstleistungsanwendung in den Basis-Nutzungszustand, wenn die Anwesenheit des mobilen Endgeräts in dem Dienstleistungsraum detektiert wird,
- wobei der Detektionsschritt insbesondere zu bestimmten Zeitpunkten durchgeführt wird, insbesondere bevorzugt regelmäßig.

Die Dienstleistungsanwendung weist mindestens ein Detektionsmodul (insbesondere ein Softwaremodul) auf. Das Detektionsmodul ist eingerichtet zum Detektieren der Anwesenheit des mobilen Endgeräts (auf dem die Dienstleistungsanwendung installiert ist) in einem Dienstleistungsraum, beispielsweise basierend auf erhaltenen Daten, wie dem vorgenannten mindestens einen Nutzungsdatensatz.

Beispielsweise kann in dem Detektionsschritt ein Detektieren einer (manuell von einem Nutzer des mobilen Endgeräts durchgeführten) Eincheck-Aktion erfolgen (zumindest bei einem CIBO- und/oder CICO-Verfahren). Beispielsweise kann ein Nutzer die Dienstleistungsanwendung aktivieren und insbesondere durch Betätigen einer Nutzerschnittstelle (z.B. ein Touchdisplay) ein Check-In Vorgang initialisieren. Eine entsprechende Eingabe kann das Detektionsmodul detektieren und dann die Dienstleistungsanwendung insbesondere in den "Check-In"-Zustand versetzen. Ausgehend vom "Check-In"-Zustand nimmt die Dienstleistungsanwendung ohne weitere Nutzerinteraktion den Basis-Nutzungszustand "System-Be-In" an, sobald die Werte der empfangenen Nutzungsdaten den ersten Grenzwert X überschreiten.

Vorzugsweise kann die Dienstleistungsanwendung den eigenen Zustand (nahezu kontinuierlich) überwachen. Insbesondere kann das Detektionsmodul zu bestimmten Zeitpunkten, vorzugsweise regelmäßig (z.B. alle x Sek.), einen Detektionsschritt erneut durchführen. Insbesondere kann bei der mindestens einen erneuten Durchführung des Detektionsschritts in dem (weiteren) Detektionsschritt ein Auswerten des mindestens einen erhaltenen Nutzungsdatensatzes anhand eines vorgegebenen Basis-Nutzungsreferenzkriteriums erfolgen. Insbesondere kann geprüft werden, ob das mindestens eine Nutzungsdatum das mindestens eine vorgegebene Basis-Nutzungsreferenzkriterium erfüllt (oder nicht).

Gemäß einer bevorzugten Ausführungsform des anmeldungsgemäßen Verfahrens kann das erhaltene Nutzungsdatum mindestens ein von einem Sensorelement des mobilen Endgeräts erhaltenes Sensordatum des mobilen Endgeräts sein. Das Auswerten des mindestens einen erhaltenen Sensordatums kann ein Vergleichen des mindestens einen Sensordatums mit einem zugehörigen und vorgegebenen Basis-Referenzdatenbereich als Basis-Nutzungsreferenzkriterium umfassen. Der Basis-Nutzungszustand kann (nur) detektiert werden, wenn das mindestens eine erhaltene Sensordatum innerhalb des mindestens einen zugehörigen Basis-Referenzdatenbereichs liegt.

Insbesondere kann eine Mehrzahl von Basis-Nutzungsreferenzkriterien in Form mindestens eines Basis-Nutzungsreferenzprofils vorgegeben sein. Ferner kann eine Vielzahl von Sensordaten bereitgestellt werden. In der Auswertung kann geprüft werden, ob die bereitgestellten (augenblicklichen) Sensordaten(werte) innerhalb des mindestens einen Basis-Nutzungsreferenzprofils liegen oder nicht (entsprechend den Ausführungen zu dem Verifizierungsreferenzprofils).

Gemäß einer bevorzugten Ausführungsform des anmeldungsgemäßen Verfahrens kann das Detektieren der Anwesenheit des mobilen Endgeräts in dem Dienstleistungsraum ein Empfangen mindestens eines durch ein weiteres mobiles Endgerät ausgesendeten (zuvor beschriebenen) Advertising-Signals mit einer Advertising-Nachricht umfassen. Insbesondere kann der Dienstleistungsanwendung die aus dem Advertising-Signal extrahierte Advertising-Nachricht als Nutzungsdatensatz bereitgestellt werden. Die Advertising-Nachricht kann (wiederum) eine Mehrzahl von weiteren Nutzungsdatensätzen insbesondere in Form der beschriebenen Advertising-Parameter enthalten.

Der mindestens eine Nutzungsdatensatz kann von der Dienstleistungsanwendung, insbesondere dem Detektionsmodul und/oder dem Verifizierungsmodul, ausgewertet werden. Insbesondere kann der mindestens eine enthaltene Nutzungsdatensatz in dem (wiederholend durchgeführten) Detektionsschritt berücksichtigt werden. Hierdurch kann die Dienstleistungsanwendung auch dann die Anwesenheit in einem Dienstleistungsraum (zuverlässig) bestimmen, wenn die erhaltenen (eigenen) Sensordaten (beispielsweise aufgrund einer (augenblicklichen) unzureichenden Mobilfunknetzabdeckung und/oder einer unzureichenden GPS- (oder Galileo oder dergleichen) Abdeckung) ein Detektieren einer Anwesenheit in einem Dienstleistungsraum nicht ermöglichen, da beispielsweise das mindestens eine Basis-Nutzungsreferenzkriterium, insbesondere das Basis-Nutzungsreferenzprofil, (augenblicklich) nicht durch die Sensordaten erfüllt ist.

Gemäß einer besonders bevorzugten Ausführungsform des anmeldungsgemäßen Verfahrens kann in dem Detektionsschritt ein Detektieren der Anwesenheit des mobilen Endgeräts in dem Dienstleistungsraum ein Auswerten des mindestens einen empfangenen Advertising-Signals (insbesondere der mindestens einen erhaltenen Advertising-Nachricht von einem weiteren mobilen Endgerät) umfassen, indem insbesondere mindestens einer der Auswerteschritte (insbesondere durch das Detektionsmodul) durchgeführt wird, aus der Gruppe, umfassend:
- Auswerten der Anzahl der von demselben weiteren mobilen Endgerät empfangenen Advertising-Signale,
- Auswerten der Anzahl an Advertising-Signalen, ausgesendet durch unterschiedliche weitere mobile Endgeräte,
- Auswerten des mindestens einen Zeitstempels der mindestens einen erhaltenen Advertising-Nachricht,
- Auswerten des mindestens einen Sensorflags,
- Auswerten der mindestens einen durch ein Backendsystem und/oder eine Inspektionsvorrichtung verifizierten Nutzungsinformation.

Grundsätzlich kann bei der Auswertung in dem Detektionsschritt die Güte der empfangenen Advertising-Nachricht bewertet werden, insbesondere basierend auf den in der Advertising-Nachricht enthaltenden Daten und/oder weiteren der Dienstleistungsanwendung zur Verfügung stehenden Daten, insbesondere des mindestens einen Nutzungsdatensatzes und dem mindestens einen Basis-Nutzungsreferenzkriterium. Die bestimmte Güte kann mit mindestens einer Referenzgüte (als Basis-Nutzungsreferenzkriterium oder Verifizierungsreferenzkriterium) in dem Detektionsschritt verglichen werden.

Vorzugsweise kann die Anzahl der Advertising-Signale, die von demselben weiteren mobilen Endgerät empfangen werden, ausgewertet werden (der Inhalt der Advertising-Nachrichten kann sich dabei ändern). Insbesondere kann beispielsweise anhand der Nutzerkennung und/oder der Sequenznummer bestimmt werden, ob eine erhaltene Advertising-Nachricht von einem mobilen Endgerät stammt, von dem bereits zuvor (innerhalb einer vorgegebenen Zeitspanne) eine Advertising-Nachricht erhalten wurde. Insbesondere kann die Güte der empfangenen Advertising-Nachricht umso höher bewertet werden, je öfter ein Advertising-Signal von demselben mobilen Endgerät empfangen wurde. Beispielsweise kann zur Bewertung mindestens eine Mindestanzahl (als Basis-Nutzungsreferenzkriterium oder Verifizierungsreferenzkriterium) vorgegeben sein. Grund der erhöhten Güte mit steigender Anzahl von empfangenen Advertising-Signalen desselben sendenden mobilen Endgeräts ist insbesondere die Annahme, dass das sendende mobile Endgerät, insbesondere dessen Dienstleistungsanwendung, regelmäßig bestimmt, ob ein verifizierter Nutzungszustand noch vorliegt. Je mehr Advertising-Signale von demselben sendenden mobilen Endgerät empfangen werden, desto öfter hat die Dienstleistungsanwendung des sendenden mobilen Endgeräts den verifizierten Nutzungszustand erfolgreich überprüft.

Alternativ oder bevorzugt zusätzlich kann ausgewertet werden, ob eine Mehrzahl von Advertising-Signalen von unterschiedlichen mobilen Endgeräten empfangen wird. Insbesondere kann beispielsweise anhand der Nutzerkennung und/oder der Sequenznummer bestimmt werden, ob eine erhaltene Advertising-Nachricht von demselben mobilen Endgerät stammt, von dem bereits (innerhalb einer vorgegebenen Zeitspanne) eine Advertising-Nachricht erhalten wurde, oder ob eine Advertising-Nachricht von einem anderen mobilen Endgerät stammt. Insbesondere kann die Güte der empfangenen Advertising-Nachrichten umso höher bewertet werden, je größer die Anzahl an unterschiedlichen aussendenden mobilen Endgeräten ist (mindestens ein Grenzwert (z.B. > 2) kann (als Basis-Nutzungsreferenzkriterium oder Verifizierungsreferenzkriterium) für die Anzahl an unterschiedlichen aussendenden mobilen Endgeräten für die Auswertung vorgegeben sein). Grund hierfür ist, dass davon ausgegangen werden kann, dass je mehr Dienstleistungsanwendungen zu dem Bestimmungsergebnis gelangen, dass sie sich jeweils in einen verifizierten Nutzungszustand befinden, desto höher die Wahrscheinlichkeit ist, dass das jeweilige Bestimmungsergebnis korrekt ist.

Alternativ oder bevorzugt zusätzlich kann der mindestens eine Zeitstempel ausgewertet werden, insbesondere der originale Zeitstempel einer weitergeleiteten Advertising-Nachricht. Insbesondere kann die Güte umso höher bewertet werden, je aktueller, gemessen am originalen Zeitstempel, die empfangene Advertising-Nachricht bzw. das Advertising-Signal ist. Bei einer älteren Advertising-Nachricht kann die Güte geringer sein, da es nicht unwahrscheinlich ist, dass sich der Zustand des aussendenden mobilen Endgeräts zwischenzeitlich geändert hat.

Auch kann das mindestens eine Sensorflag ausgewertet werden. Insbesondere kann anhand des mindestens einen Sensorflags bestimmt werden, ob mindestens ein Sensordatum des die Advertising-Nachricht aussendenden mobilen Endgeräts über einem zugehörigen Sensorgrenzwert liegt. Insbesondere kann die Güte der empfangenen Advertising-Nachrichten umso höher bewertet werden, je mehr Sensorflags in der Nachricht den Wert 1 haben.

Zudem kann ein Auswerten der mindestens einen durch ein Backendsystem und/oder eine Inspektionsvorrichtung verifizierten Nutzungsinformation erfolgen. Liegt eine derartige verifizierte Nutzungsinformation vor, kann die Advertising-Nachricht mit einer hohen Güte bewertet werden.

Es versteht sich, dass vorzugsweise zwei oder mehr der vorgenannten Auswerteschritte durchgeführt und insbesondere in Relation zu einander gesetzt werden können. Während beispielsweise die Güte einer Advertising-Nachricht zunächst niedrig bewertet werden könnte, weil die Advertising-Nachricht die erste empfangene Advertising-Nachricht von einem bestimmten mobilen Endgerät ist, kann beispielsweise eine darin enthaltene Nutzungsinformation, die von einem Backendsystem und/oder einer Inspektionsvorrichtung verifiziert wurde (und die einen aktuellen Zeitstempel aufweist), zu einer hohen Gesamt-Bewertung der Güte der erhaltenen Advertising-Nachricht führen.

Die vorgenannten Auswerteschritte können zumindest teilweise (auch) bei der Bestimmung, durch das Verifizierungsmodul, ob sich die Dienstleistungsanwendung in einem verifizierten Nutzungszustand befindet, durchgeführt werden.

Wie bereits beschrieben wurde, kann bei einer Ausführungsform des anmeldungsgemäßen Verfahrens der erhaltene Nutzungsdatensatz mindestens ein von einem Sensorelement des mobilen Endgeräts erhaltene Sensordatum (also: ein Sensorwert) des mobilen Endgeräts sein. Das mindestens eine erhaltene Sensordatum kann sein:
- eine an einer Mobilfunkschnittstelle des mobilen Endgeräts erfasste Signalstärke eines Mobilfunknetzes,
   und/oder
- eine durch einen Positionssensor des mobilen Endgeräts erfasste geographische Position,
   und/oder
- eine an einer Nahfeldschnittstelle des mobilen Endgeräts erfasste Signalstärke eines Nahfeldes,
   und/oder
- eine durch einen Beschleunigungssensor des mobilen Endgeräts erfasste Beschleunigung,
   und/oder
- eine durch einen Geschwindigkeitssensor des mobilen Endgeräts erfasste Geschwindigkeit.

Vorzugsweise können eine Mehrzahl der vorgenannten Sensordaten (nahezu kontinuierlich) bereitgestellt werden und von der Dienstleistungsanwendung (nahezu kontinuierlich) ausgewertet werden, insbesondere basierend auf mindestens einem zugehörigen Basis-Nutzungsreferenzkriterium, insbesondere einem Basis-Nutzungsreferenzprofil, und/oder mindestens einem zugehörigen Verifizierungsreferenzkriterium, insbesondere einem Verifizierungsreferenzprofil.

Beispielhaft kann geprüft werden, ob eine an mindestens einer Mobilfunkschnittstelle (z.B. LTE-Schnittstelle) gemessene Signalstärke eines empfangenen Mobilfunknetzes über einem ersten Basis-Signalstärkegrenzwert und/oder einem ersten Verifizierungssignalstärkegrenzwert liegt (oder nicht), also das mindestens eine Basis-Nutzungsreferenzkriterium und/oder das mindestens eine Verifizierungsreferenzkriterium erfüllt ist (oder nicht). Der Verifizierungssignalstärkegrenzwert kann beispielsweise höher sein als der Basis-Signalstärkegrenzwert.

In entsprechender Weise können die weiteren Parameter überprüft werden. Beispielsweise kann geprüft werden, ob die erfasste geographische Position innerhalb eines geographischen Basisreferenzbereichs und/oder geographischen Verifizierungsreferenzbereichs liegt, wobei der geographische Verifizierungsreferenzbereich eine kleinere Fläche aufweisen kann als der geographische Basisreferenzbereich. Bei einem Fahrzeug als Dienstleistungsraum kann ein geographischer Referenzbereich insbesondere den Bereich angegeben, der durch das Fahrzeug (z.B. Bus, Schienenfahrzeug, Wasserfahrzeug etc.) entsprechend einem vorgegebenen Fahrplan zurückgelegt wird.

Wenn beispielsweise eine gemessene Geschwindigkeit und ein periodisch wiederholtes Beschleunigungsmuster (insbesondere in vertikaler Richtung) für eine bestimmte Zeitdauer gemessen werden, kann davon ausgegangen werden, dass sich der Nutzer bewegt, insbesondere selbst läuft. Dies ist ein Indiz dafür, dass eine Transportvorrichtung von dem Nutzer verlassen worden ist.

Es versteht sich, dass bei anderen Varianten der Anwendung weitere Sensorelemente des mobilen Endgeräts verwendet und deren Daten ausgewertet werden können. Beispielsweise kann eine aktivierte Softwareanwendung mit lesbarem Inhalt (oder eine Spieleanwendung oder dergleichen) darauf hindeuten, dass sich der Nutzer in einem Dienstleistungsraum befindet und den Inhalt der Softwareanwendung liest (bzw. spielt oder dergleichen). Auch kann beispielweise ein Sensor, wie der Beschleunigungssensor, Vibrationen eines Transportfahrzeugs erfassen und der Dienstleistungsanwendung bereitstellen.

Gemäß einer weiteren Ausführungsform des anmeldungsgemäßen Verfahrens kann die mindestens eine verifizierte Nutzungsinformation, die ein weiteres mobiles Endgerät von einem ersten mobilen Endgerät erhält, eine Nutzungszeitdauer sein, die angibt, wie lange sich die Dienstleistungsanwendung des ersten mobilen Endgeräts bereits (ohne Unterbrechung) in dem Basis-Nutzungszustand befindet. Ein Verifizierungsreferenzkriterium kann eine vorgegebene Mindestzeitdauer sein. Das Bestimmen des verifizierten Nutzungszustands kann ein Detektieren eines Überschreitens der vorgegebenen Mindestzeitdauer durch die Nutzungszeitdauer umfassen. Insbesondere ist erkannt worden, dass nach einer bestimmten Zeitdauer, in der wiederholend durch die Dienstleistungsanwendung stets festgestellt wurde, dass sich das mobile Endgerät in dem Dienstleistungsraum befindet, eine ausreichende Wahrscheinlichkeit vorliegt, dass sich das mobile Endgerät tatsächlich in dem Dienstleistungsraum befindet. Es kann daher auf einen verifizierten Nutzungszustand geschlossen werden.

Insbesondere kann bei erstmaliger Detektion einer Anwesenheit in einem Dienstleistungsnutzungsraum ein Timer gestartet werden. Wenn bis zum Ablauf einer vorgegebenen Mindestzeitdauer stets erneut detektiert wurde, dass sich das mobile Endgerät in dem Dienstleistungsraum befindet, kann die Dienstleistungsanwendung in den verifizierten Nutzungszustand gesetzt werden (bis beispielsweise detektiert wird, dass sich das mobile Endgerät vermutlich nicht mehr in dem Dienstleistungsraum befindet).

Gemäß einer weiteren Ausführungsform des anmeldungsgemäßen Verfahrens kann der mindestens eine erhaltene Nutzungsdatensatz eine von einem Backendsystem verifizierte Nutzungsinformation und/oder eine von einer Inspektionsvorrichtung verifizierte Nutzungsinformation sein, wie zuvor beschrieben wurde. Das mindestens eine Verifizierungsreferenzkriterium kann ein Vorliegen einer verifizierten Nutzungsinformation sein. Das Bestimmen des verifizierten Nutzungszustands kann ein Detektieren eines Vorliegens der verifizierten Nutzungsinformation umfassen.

Gemäß einer weiteren bevorzugten Ausführungsform des anmeldungsgemäßen Verfahrens kann der mindestens eine erhaltene Nutzungsdatensatz ein von einem Sensorelement des mobilen Endgeräts erhaltenes Sensordatum (ein Sensorwert) des mobilen Endgeräts sein, wie zuvor bereits beschrieben wurde. Das Auswerten des mindestens einen erhaltenen Sensordatums kann ein Vergleichen des mindestens einen Sensordatums mit einem zugehörigen und vorgegebenen Verifizierungsparameterbereich als Verifizierungsreferenzkriterium umfassen (wie bereits beispielhaft beschrieben wurde). Der verifizierte Nutzungszustand kann detektiert werden, wenn das erhaltene Sensordatum innerhalb des Verifizierungsparameterbereichs liegt.

Gemäß einer weiteren bevorzugten Ausführungsform des anmeldungsgemäßen Verfahrens kann das Verfahren (ferner) umfassen:
- Erhalten einer Mehrzahl von zeitabhängigen Sensordaten, umfassend zumindest eine Mobilfunksignalstärke und ein Positionssignal,
- wobei das Auswerten das Detektieren eines Abfallens der Mehrzahl von zeitabhängigen Sensordaten auf im Wesentlichen null umfasst, und
- das mindestens eine Verifizierungsreferenzkriterium ein Abfallen der Mehrzahl von zeitabhängigen Sensordaten auf im Wesentlichen null ist.

Insbesondere ist erkannt worden, dass, wenn ein Fahrzeug in einen Tunnel oder dergleichen einfährt, zumindest die Mobilfunksignalstärke und ein Positionssignal (aufgrund der nicht vorhandenen Netzabdeckung) nicht mehr an den entsprechenden Schnittstellen des mobilen Endgeräts bei einer erfolgten Einfahrt anliegen. Anders ausgedrückt, fällt ein entsprechendes zeitliches Sensorsignal bzw. ein entsprechendes Sensordatum auf null ab. Insbesondere fallen zumindest die mindestens eine erfasste Mobilfunksignalstärke und das mindestens eine erfasste Positionssignal nahezu gleichzeitig auf null ab. Entsprechend kann ein derartiges Signalprofil als Beleg bewertet werden, dass sich das entsprechende mobile Endgerät in einem Dienstleistungsraum befindet, so dass insbesondere, durch das Verifizierungsmodul der Dienstleistungsanwendung, bei einem entsprechenden Parameterverlauf ein verifizierter Nutzungszustand bestimmt werden kann.

Gemäß einer besonders bevorzugten Ausführungsform des anmeldungsgemäßen Verfahrens kann das Verfahren (ferner) umfassen:
- Bewirken, durch das erste Sendemodul, eines Aussendens eines weiteren Advertising-Signals mit einer weiteren Advertising-Nachricht, bei einem Empfang einer ersten Advertising-Nachricht,
- wobei die weitere Advertising-Nachricht zumindest teilweise auf der ersten Advertising-Nachricht basiert.

Anmeldungsgemäß ist es insbesondere erkannt worden, dass zur Verbreitung einer Advertising-Nachricht eines (in der Regel in der Reichweite begrenzten) Advertising-Signals zumindest der wesentliche Inhalt einer empfangenen Advertising-Nachricht von dem empfangenden mobilen Endgerät weitergeleitet werden kann. Hierdurch können im Wesentlichen sämtliche in einem Nutzungsraum befindliche mobile Endgerät die von einer sich in einem verifizierten Nutzungszustand befindlichen Dienstleistungsanwendung ausgesendete Advertising-Nachricht erhalten.

Beispielsweise kann die erhaltene Advertising-Nachricht komplett weitergeleitet und als weitere Advertising-Nachricht ausgesendet werden. Auch kann beispielsweise die erhaltene Advertising-Nachricht um weitere Daten ergänzt werden, wie die Nutzerkennung des weiterleitenden mobilen Endgeräts, einen Zeitstempel der Aussendung der weiteren Advertising-Nachricht, eine geänderte oder zusätzliche Sequenznummer und/oder historische Daten, die die Historie der ausgesendeten Advertising-Nachricht abbilden.

Insbesondere ist anmeldungsgemäß erkannt worden, dass hierdurch ein virales Netz gebildet werden kann, das eine Weiterleitung wesentlicher Informationen für die Nutzung einer Dienstleistung ermöglicht, ohne dass im Dienstleistungsraum die Installation einer dedizierten Erfassungs- und / oder Kommunikationsinfrastruktur notwendig wäre.

Wie bereits beschrieben wurde, kann gemäß einer weiteren Ausführungsform des anmeldungsgemäßen Verfahrens vorgesehen sein, dass das Bestimmen des verifizierten Nutzungszustands zu bestimmten Zeitpunkten durchgeführt wird, insbesondere regelmäßig. Insbesondere kann eine regelmäßige Neubewertung des Nutzungszustands erfolgen, indem beispielsweise eine oder mehrere der vorgenannten Auswerteschritte durchgeführt werden.

Vorzugsweise kann das Bestimmen des verifizierten Nutzungszustands nach Ablauf eines vorgegebenen Zeitintervalls durchgeführt werden. Liegen beispielsweise keine

Signale an bzw. werden keine Sensordaten erhalten, die das mindestens eine Verifizierungsreferenzkriterium, insbesondere -profil, erfüllen, kann nach einer bestimmten Zeitdauer (z.B. zwischen 1 Minute und 10 Minuten) der verifizierte Nutzungszustand aufgehoben und insbesondere das Bewirken eines Aussendens eines Advertising-Signals beendet werden.

Alternativ oder vorzugsweise zusätzlich kann bei Detektion einer plötzlichen und insbesondere signifikanten Änderung der Rahmenbedingungen erneut ein Bestimmen des verifizierten Nutzungszustands durchgeführt werden. Wenn beispielsweise die Anzahl der jeweils ein Advertising-Signal aussendenden mobilen Endgeräte stark sinkt oder ein Geschwindigkeits- und/oder Beschleunigungssensor indiziert, dass der Nutzer über eine bestimmte Zeitdauer geht, kann eine Neubewertung durchgeführt werden.

Auch kann eine Neubewertung durchgeführt werden, wenn ein als höherwertig eingestuftes Signal bestätigt, dass sich das mobile Endgerät in einem anderen Raum, der kein Dienstleistungsraum ist, befindet, wie ein bekanntes Beacon eines Einkaufszentrums oder dergleichen.

Bei einer weiteren Ausführungsform des anmeldungsgemäßen Verfahrens ist vorgesehen, dass das Verfahren ferner ein Bewirken, durch das erste Sendemodul, eines Aussendens einer zweiten Advertising-Nachricht mit einem Nutzungsbeendigungsdatensatz umfassen kann, wenn detektiert wird, dass das mobile Endgerät den Dienstleistungsraum verlassen hat. Insbesondere kann dann ein "System-Be-Out" ausgesendet werden und mindestens eine weitere Dienstleistungsanwendung über den geänderten Nutzungszustand des aussendenden mobilen Endgeräts, insbesondere der entsprechenden Dienstleistungsanwendung, informiert werden.

Gemäß einer weiteren Ausführungsform des anmeldungsgemäßen Verfahrens kann das Verfahren (ferner) umfassen ein Bewirken, durch das erste Sendemodul, eines aktiven Aussendens einer Anfrage, wenn nach einer ursprünglich detektierten Anwesenheit des mobilen Endgeräts in einem Dienstleistungsraum bei einer erneuten Detektion festgestellt wird, dass das mindestens eine Basis-Nutzungsreferenzkriterium durch den mindestens einen erhaltenen Nutzungsdatensatz nicht erfüllt wird (bevor in den Nicht-Nutzungszustand gewechselt wird).

Insbesondere kann der Fall auftreten, dass sich in einem Dienstleistungsraum kein mobiles Endgerät mit einer Dienstleistungsanwendung in einem verifizierten Nutzungszustand befindet, so dass keine aktive Aussendung eines Advertising-Signals erfolgt. Jedoch kann sich die entsprechend mindestens eine Dienstleistungsanwendung in einem Basis-Nutzungszustand befinden. Wenn eine weitere Dienstleistungsanwendung in einem Detektionsschritt detektiert, dass das mindestens eine Basis-Nutzungsreferenzkriterium durch den mindestens einen erhaltenen Nutzungsdatensatz nicht erfüllt wird, kann zunächst eine Aussendung einer Anfrage bewirkt werden, um aktiv nach den Nutzungszuständen der in Reichweite befindlichen Dienstleistungsanwendungen zu fragen. Erhält eine Dienstleistungsanwendung eine derartige Anfrage, kann, durch das erste Sendemodul, ein Aussenden einer Antwort bewirkt werden, umfassend den (augenblicklichen) Nutzungszustand.

Basierend auf den empfangenen Antworten, insbesondere den erhaltenen Nutzungszuständen, kann die anfragende Dienstleistungsanwendung bestimmen, ob der Basis-Nutzungszustand vorliegt (oder nicht). Beispielsweise kann vorgesehen sein, dass das Detektionsmodul einen Basis-Nutzungszustand bestimmt, wenn zumindest zwei Antworten von unterschiedlichen Dienstleistungsanwendungen mit einem Basis-Nutzungszustand erhalten werden. Es versteht sich, dass auch schon eine Antwort ausreichen kann oder erst drei oder mehr erforderlich sein müssen.

Das Verfahren umfasst:
- Generieren, zumindest während des Basis-Nutzungszustands, durch ein Generierungsmodul der Dienstleistungsanwendung, mindestens eines Nutzungsprotokolldatensatzes über die Nutzung der Dienstleistung, und
- Bewirken, durch ein zweites Sendemodul der Dienstleistungsanwendung, eines Aussendens, durch das mobile Endgerät an ein Backendsystem, einer Nutzungsprotokollnachricht, enthaltend den mindestens einen generierten Nutzungsprotokolldatensatz.

Insbesondere kann nach einer (erstmaligen) Detektion eines Basis-Nutzungszustands bis zur Detektion einer Beendigung der Nutzung des Dienstleistungsraums ein Nutzungsprotokolldatensatz über die durchgeführte Dienstleistung erstellt werden. Insbesondere kann mindestens ein erhaltener Nutzungsdatensatz, insbesondere sämtliche erhaltene Nutzungsdatensätze, kontinuierlich aufgezeichnet werden. Insbesondere kann auch jede erhaltene Advertising-Nachricht und jede ausgesendete eine Advertising-Nachricht aufgezeichnet und in einem Nutzungsprotokolldatensatz protokolliert werden.

Beispielsweise können zumindest die geographischen Positionsdaten (sofern vorhanden) aufgezeichnet werden. Die Erstellung des Nutzungsprotokolldatensatz dient insbesondere einer anschließenden Abrechnung der durch den Nutzer in Anspruch genommenen Dienstleistung durch ein Backendsystem. Auch kann dieser für Inspektionszwecke genutzt werden.

Ein zweites Sendemodul kann insbesondere ein Aussenden einer Nutzungsprotokollnachricht, enthaltend den mindestens einen generierten Nutzungsprotokolldatensatz, an ein Backendsystem (z.B. über ein Mobilfunknetz) bewirken. Eine Aussendung einer Nutzungsprotokollnachricht kann zumindest nach einer Detektion einer Beendigung der Nutzung des Dienstleistungsraums bewirkt werden. Vorzugsweise kann eine Mehrzahl von Nutzungsprotokollnachrichten bis zur Detektion einer Beendigung der Nutzung des Dienstleistungsraums ausgesendet werden (beispielsweise alle x min), sofern eine Kommunikationsverbindung mit dem Backendsystem herstellbar ist. Bei einer temporären Kommunikationsunterbrechung zu dem Backendsystem kann der mindestens eine Nutzungsprotokolldatensatz in einem Datenspeicher des mobilen Endgeräts so lange gespeichert werden, bis eine Kommunikationsverbindung zu dem Backendsystem hergestellt werden kann.

Das Verfahren umfasst:
- Empfangen, durch mindestens ein Empfangsmodul des Backendsystems, einer Mehrzahl von Nutzungsprotokollnachrichten von einer Mehrzahl von mobilen Endgeräten,
- Ermitteln, durch mindestens ein Auswertemodul des Backendsystems, einer ersten Fahrtenkette für ein erstes mobiles Endgerät, das einen verifizierten Nutzungsstatus hat, basierend auf mindestens einer ersten Nutzungsprotokollnachricht des ersten mobilen Endgeräts,
- Ermitteln, durch das mindestens eine Auswertemodul des Backendsystems, einer zweiten Fahrtenkette für ein zweites mobiles Endgerät, das einen nicht-verifizierten Nutzungszustand hat, basierend auf mindestens einer zweiten Nutzungsprotokollnachricht des zweiten mobilen Endgeräts, enthaltend mindestens einen zweiten Nutzungsprotokolldatensatz, wobei das Generierungsmodul der Dienstleistungsanwendung des zweiten mobilen Endgeräts den mindestens einen zweiten Nutzungsprotokolldatensatz erst dann generiert, wenn das zweite mobile Endgerät von dem ersten mobilen Endgerät mindestens eine Advertising-Nachricht empfangen hat.

Wie bereits beschrieben wurde, kann insbesondere jede Dienstleistungsanwendung zumindest nach einer Detektion einer Beendigung der Nutzung des Dienstleistungsraums eine jeweilige Aussendung mindesten einer Nutzungsprotokollnachricht bewirken, um insbesondere eine Abrechnung der in Anspruch genommenen Dienstleistung durch das Backendsystem zu ermöglichen.

Das Backendsystem kann, zumindest im Falle eines Transportsystems, ein Auswertemodul aufweisen, eingerichtet zum Rekonstruieren einer zurückgelegten Fahrstrecke bzw. Fahrtenkette. Eine Fahrtenkette ist insbesondere die zwischen einer Startstation (also die Station, in der ein Benutzer erstmalig eine Transportvorrichtung betritt) eines Transportsystems und einer Endstation des Transportsystems (also die Station, in der ein Benutzer eine Transportvorrichtung endgültig verlässt, also insbesondere nicht in eine weitere Transportvorrichtung umsteigt) von einem Nutzer mit mindestens einer Transportvorrichtung zurückgelegte Fahrstrecke. Ist die Fahrtenkette bestimmt, kann in herkömmlicher Weise (basierend auf vorgegebenen Tarifdaten) der für die Inanspruchnahme dieser Transportdienstleistung zu entrichtende Betrag berechnet werden.

Für eine korrekte Abrechnung ist es jedoch erforderlich, dass in zuverlässiger Weise die Fahrstrecke bzw. Fahrtenkette rekonstruiert werden kann. Anmeldungsgemäß ist erkannt worden, dass die Zuverlässigkeit der Rekonstruktion verbessert werden kann, wenn das Auswertemodul des Backendsystems die Fahrstrecke bzw. Fahrtenkette, insbesondere die zweite Fahrtenkette für ein zweites mobiles Nutzerendgerät in einem nicht-verifizierten Nutzungszustand, ermittelt, basierend auf mindestens einer zweiten Nutzungsprotokollnachricht des zweiten mobilen Endgeräts, wobei das Generierungsmodul der Dienstleistungsanwendung des zweiten mobilen Endgeräts den zweiten Nutzungsprotokolldatensatz erst dann generiert, wenn das zweite mobile Endgerät von dem ersten mobilen Endgerät mindestens eine Advertising-Nachricht empfangen hat.

Anders ausgedrückt, empfängt ein zweites, in einem nicht-verifizierten Nutzungszustand befindliches, mobiles Endgerät während einer Fahrt mindestens eine Advertising-Nachricht von einem ersten, in einem verifizierten Nutzungszustand befindlichen, mobilen Endgerät. Das zweite mobile Endgerät sendet nun mindestens eine zweite Nutzungsprotokollnachricht an das Backendsystem. Diese zweite Nutzungsprotokollnachricht enthält unter anderem verifizierte Nutzungsinformationen aus der mindestens einen empfangenen Advertising-Nachricht. Das Auswertemodul des Backendsystems kann nun das erste und das zweite mobile Endgerät als zusammen in einem Fahrzeug befindlich bewerten und insbesondere die Fahrtenkette des zweiten mobilen Endgeräts auf Basis von besser bewerteten Daten rekonstruieren, obwohl das zweite mobile Endgerät in einem nicht-verifizierten Nutzungszustand war.

Ein weiterer Aspekt der Anmeldung ist eine Dienstleistungsanwendung nach Anspruch 12, insbesondere in Form einer durch einen Prozessor eines mobilen Endgeräts ausführbaren Softwareanwendung zur Installation auf einem mobilen Endgerät. Die Dienstleistungsanwendung umfasst mindestens ein Empfangsmodul, eingerichtet zum Erhalten mindestens eines Nutzungsdatensatzes. Die Dienstleistungsanwendung umfasst mindestens ein Verifizierungsmodul eingerichtet zum Bestimmen eines verifizierten Nutzungszustands in einem Basis-Nutzungszustand der Dienstleistungsanwendung, basierend auf dem mindestens einen erhaltenen Nutzungsdatensatz und mindestens einem vorgegebenen Verifizierungsreferenzkriterium. Die Dienstleistungsanwendung umfasst mindestens ein erstes Sendemodul eingerichtet zum Aussenden, durch das mobile Endgerät, eines Advertising-Signals mit einer Advertising-Nachricht, wenn ein verifizierter Nutzungszustand bestimmt wurde. Die Advertising-Nachricht zeigt (insbesondere Empfängern) an, dass die (die Aussendung bewirkende) Dienstleistungsanwendung einen verifizierten Nutzungszustand bestimmt hat (bzw. sich in einem entsprechenden Zustand befindet).

Die Dienstleistungsanwendung ist insbesondere eingerichtet, das zuvor beschriebene Verfahren durchzuführen. Insbesondere kann eine anmeldungsgemäße Dienstleistungsanwendung entsprechend dem zuvor beschriebenen Verfahren betrieben werden.

Die Dienstleistungsanwendung ist insbesondere in Form eines Computerprogramms gebildet. Das Computerprogramm umfasst Softwarecode, der so angepasst ist, dass, wenn der Softwarecode durch einen Prozessor des mobilen Endgeräts ausgeführt wird, das zuvor beschriebene Verfahren durchgeführt wird.

Das Computerprogramm, insbesondere die Instruktionen bzw. Programmanweisungen, können in einem Computerprogrammprodukt gespeichert sein, insbesondere einem Programmspeicher. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann ein mobiles Endgerät einen Hauptspeicher aufweisen, zum Beispiel einen flüchtigen oder nicht-flüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der Prozessor des mobilen Endgeräts kann beispielsweise Zwischenergebnisse oder ähnliches in dem Hauptspeicher speichern.

Ein noch weiterer Aspekt der Anmeldung ist ein mobiles Endgerät nach Anspruch 13, umfassend mindestens eine auf dem mobilen Endgerät installierte zuvor beschriebene Dienstleistungsanwendung. Insbesondere kann der mindestens eine Prozessor des mobilen Endgeräts die installierte Dienstleistungsanwendung entsprechen dem zuvor beschriebenen Verfahren ausführen.

Beispielhafte und nicht abschließende mobile Endgeräte sind Smartphones, Tablet-Computer, mobile Spielkonsolen, Laptops, Netbooks, Datenbrillen, Smart-Watches und ähnliche Wearables. Alternativ kann ein mobiles Endgerät ein dediziertes Ticketing-Gerät sein, das ausschließlich für eine Ticketing-Anwendung ausgelegt ist.

Ein noch weiterer Aspekt der Anmeldung ist ein Dienstleistungssystem, insbesondere ein Transportsystem, umfassend mindestens ein erstes (und vorzugsweise mindestens ein zweites) zuvor beschriebenes mobiles Endgerät und mindestens ein (zuvor beschriebenes) Backendsystem.

Es sei angemerkt, dass bei einem verifizierten Nutzungszustand auch stets ein Basis-Nutzungszustand gegeben ist.

Ein zuvor beschriebenes Modul, Element etc. kann zumindest teilweise Hardwareelemente (z.B. Prozessor, Speichermittel etc.) und/oder zumindest teilweise Softwareelemente (z.B. ausführbaren Code) umfassen.

Die Merkmale der Verfahren, Dienstleistungsanwendungen, mobilen Endgeräte und Dienstleistungssysteme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Verfahren, die anmeldungsgemäße Dienstleistungsanwendung, das anmeldungsgemäße mobile Endgerät und das anmeldungsgemäße Dienstleistungssystem auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines mobilen Endgeräts gemäß der vorliegenden Anmeldung mit einem Ausführungsbeispiel einer Dienstleistungsanwendung gemäß der vorliegenden Anwendung,
- Fig. 2: eine schematische Ansicht eines Ausführungsbeispiels eines Dienstleistungssystems gemäß der vorliegenden Anmeldung,
- Fig. 3: ein Diagramm eines Ausführungsbeispiels eines Verfahrens gemäß der vorliegenden Anmeldung,
- Fig. 4: ein Diagramm eines weiteren Ausführungsbeispiels eines Verfahrens gemäß der vorliegenden Anwendung,
- Fig. 5: ein schematisches Szenario einer Transportdienstleistung, bei dem ein Ausführungsbeispiel eines Verfahrens gemäß der vorliegenden Anwendung anwendbar ist,

- Fig. 5a: ein beispielhafter Signalverlauf gemäß einem beispielhaften Anwendungsfall bei dem Szenario nach Figur 5,
- Fig. 5b: ein beispielhafter weiterer Signalverlauf gemäß einem beispielhaften weiteren Anwendungsfall bei dem Szenario nach Figur 5,
- Fig. 5c: ein beispielhafter weiterer Signalverlauf gemäß einem beispielhaften weiteren Anwendungsfall bei dem Szenario nach Figur 5,
- Fig. 6: ein schematisches weiteres Szenario einer Transportdienstleistung, bei dem ein Ausführungsbeispiel eines Verfahrens gemäß der vorliegenden Anwendung anwendbar ist, und
- Fig. 6a: ein beispielhafter Signalverlauf gemäß einem beispielhaften Anwendungsfall bei dem Szenario nach Figur 6.

Nachfolgend werden für gleiche Elemente gleiche Bezugszeichen verwendet.

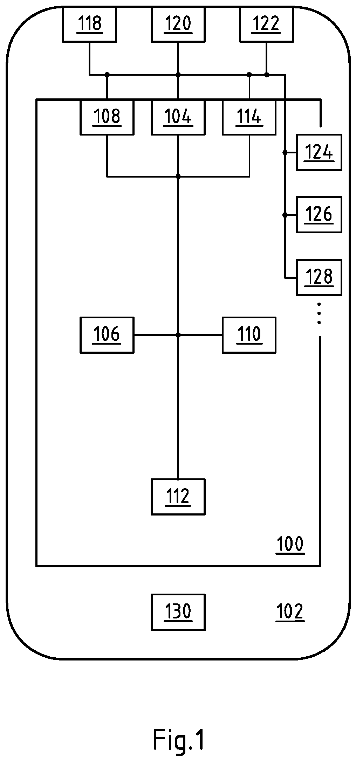

Die Figur 1 zeigt eine schematische Ansicht eines Ausführungsbeispiels eines mobilen Endgeräts 102 gemäß der vorliegenden Anmeldung mit einem Ausführungsbeispiel einer Dienstleistungsanwendung 100 gemäß der vorliegenden Anmeldung.

Beispielhaft kann das mobile Endgerät 102 ein Smartphone 102 sein, auf dem die Dienstleistungsanwendung 100 (insbesondere nach einem herkömmlichen Registrierungsvorgang des Nutzers) in Form einer Softwareanwendung 100 installiert ist. Insbesondere ist die Softwareanwendung 100 bzw. das Computerprogramm 100 von einem Prozessor 130 des mobilen Endgeräts 102 ausführbar.

Die Dienstleistungsanwendung 100 kann insbesondere aus einer Mehrzahl von ausführbaren Softwaremodulen 104 bis 114 gebildet sein. Die Dienstleistungsanwendung 100 umfasst mindestens ein Empfangsmodul 104, eingerichtet zum Erhalten mindestens eines Nutzungsdatensatzes. Insbesondere kann der mindestens eine Nutzungsdatensatz von Schnittstellen/Sensorelementen 118 bis 128 des mobilen Endgeräts 102 dem Empfangsmodul 104 der Dienstleistungsanwendung 100 zur weiteren Verarbeitung durch die Dienstleistungsanwendung 100 bereitgestellt werden.

Darüber hinaus umfasst die Dienstleistungsanwendung 100 mindestens ein Verifizierungsmodul 106, eingerichtet zum Bestimmen eines verifizierten Nutzungszustands in einem Basis-Nutzungszustand der Dienstleistungsanwendung 100, basierend auf dem mindestens einen erhaltenen Nutzungsdatensatz und mindestens einem vorgegebenen Verifizierungsreferenzkriterium. Insbesondere kann das Empfangsmodul 104 den (vorzugsweise nahezu kontinuierlich) erhaltenen mindestens einen Nutzungsdatensatz dem Verifizierungsmodul 106 zur weiteren Verarbeitung zur Verfügung stellen.

Wie ferner zu erkennen ist, weist die Dienstleistungsanwendung 100 mindestens ein erstes Sendemodul 108 auf, eingerichtet zum Aussenden, durch das mobile Endgerät 102, eines Advertising-Signals mit einer Advertising-Nachricht, wenn ein verifizierter Nutzungszustand bestimmt wurde. Die Advertising-Nachricht ist derart gebildet, dass eine empfangende, auf einem weiteren (nicht gezeigten) mobilen Endgerät laufende, Dienstleistungsanwendung erkennen kann, dass (zumindest die ursprünglich die Aussendung bewirkende) Dienstleistungsanwendung 100 einen verifizierten Nutzungszustand bestimmt hat bzw. sich in einem solchen befindet.

Wenn ein verifizierter Nutzungszustand nicht bestimmt wurde bzw. nicht vorliegt, so wird ein (aktives) Aussenden, durch das mobile Endgerät 102, eines Advertising-Signals mit einer Advertising-Nachricht blockiert.

Vorzugsweise umfasst die Dienstleistungsanwendung 100 mindestens ein Detektionsmodul 110. Das Detektionsmodul 110 ist insbesondere eingerichtet zum Detektieren einer Anwesenheit des mobilen Endgeräts 102 in einem (vorliegend nicht dargestellten) Dienstleistungsraum in einem Detektionsschritt. Das Detektionsmodul 110 kann bei Detektion einer Anwesenheit des mobilen Endgeräts 102 in einem Dienstleistungsraum, beispielsweise basierend auf einer detektierten (manuell von einem Nutzer des mobilen Endgeräts 102 durchgeführten) Eincheck-Aktion und/oder auf einer Feststellung, dass der mindestens eine erhaltene Nutzungsdatensatz mindestens ein zugehöriges und vorgegebenes Basis-Nutzungsreferenzkriterium erfüllt, die Dienstleistungsanwendung 100 in einen Basis-Nutzungszustand setzen.

Das Detektieren der Anwesenheit des mobilen Endgeräts 102 in dem Dienstleistungsraum kann insbesondere ein Empfangen mindestens eines durch ein weiteres (nicht gezeigtes) mobiles Endgerät ausgesendeten Advertising-Signals mit einer Advertising-Nachricht umfassen.

Wie bereits beschrieben wurde, kann das Detektionsmodul 110 (zumindest nahezu) kontinuierlich den Nutzungszustand der Dienstleistungsanwendung überwachen, um insbesondere das Verlassen des Dienstleistungsraums durch einen Nutzer zu detektieren.

Ferner umfasst die Dienstleistungsanwendung 100 vorzugweise ein Generierungsmodul 112, eingerichtet zum Generieren mindestens eines Nutzungsprotokolldatensatzes zumindest während des Basis-Nutzungszustands über die Nutzung bzw. Inanspruchnahme einer bestimmten Dienstleistung, insbesondere Transportdienstleistung. Insbesondere kann zumindest während der Zeit, in der sich die Dienstleistungsanwendung 100 in dem Basis-Nutzungszustand und/oder dem verifizierten Nutzungszustand befindet, eine Mehrzahl an Daten aufgezeichnet und insbesondere protokolliert werden. Insbesondere werden derartige Daten protokolliert, die es ermöglichen, einen Nutzungsverlauf einer Dienstleistung, insbesondere eine Fahrtenkette, zu rekonstruieren. Beispielsweise können zumindest sämtliche erhaltenen Nutzungsdatensätze aufgezeichnet und ein entsprechender Protokolldatensatz (auch Log-Datensatz genannt) generiert werden. Es versteht sich, dass auch für eine bestimmte Zeitdauer nach einer Detektion, dass sich das mobile Endgerät 102 nicht mehr in einem Dienstleistungsraum befindet, ein Nutzungsprotokolldatensatz generiert werden kann.

Die Dienstleistungsanwendung 100 kann vorzugsweise mindestens ein zweites Sendemodul 114 aufweisen, eingerichtet zum Bewirken eines Aussendens, durch das mobile Endgerät 102, einer Nutzungsprotokollnachricht, enthaltend den mindestens einen generierten Nutzungsprotokolldatensatz, an ein (nicht gezeigtes) Backendsystem.

Der mindestens eine Nutzungsprotokolldatensatz kann beispielsweise zwischengespeichert werden und zumindest bei Detektion, dass sich das mobile Endgerät 102 nicht mehr in einem Dienstleistungsraum befindet, ausgesendet werden. Es versteht sich, dass der mindestens eine Nutzungsprotokolldatensatz so lange gespeichert bleiben kann, bis eine Kommunikationsverbindung zwischen dem mobilen Endgerät 102 und dem entfernt angeordneten Backendsystem (beispielsweise gebildet durch einen oder mehrere (verteilt) angeordnete Server) hergestellt werden kann.

Das mobile Endgerät 102 kann mindestens eine erste (Nahfeld-)Schnittstelle 118, 120 bzw. mindestens ein erstes (Nahfeld-)Kommunikationselement 118, 120 aufweisen, um insbesondere bei einer Bewirkung durch das erste Sendemodul 108 ein Advertising-Signal, enthaltend eine Advertising-Nachricht, zumindest auszusenden. Vorzugsweise kann ein erstes Kommunikationselement 118, 120 auch zum Empfangen eines Advertising-Signals, enthaltend eine Advertising-Nachricht, eingerichtet sein. Beispielhaft weist das mobile Endgerät 102 vorliegend eine Bluetooth-Schnittstelle 118 (z.B. Antenne mit Antennencontroller) und (optional) eine WLAN-Schnittstelle 120 (z.B. Antenne mit Antennencontroller) auf.

Vorzugsweise kann zum Aussenden des Advertising-Signals die Bluetooth-Schnittstelle 118 verwendet werden. Insbesondere kann das erste Sendemodul 108 eine auszusendende Advertising-Nachricht generieren und diese der Bluetooth-Schnittstelle 118 zur Aussendung übergeben. Insbesondere kann die Bluetooth-Schnittstelle 118 eingerichtet sein zum Generieren und Aussenden eines zuvor beschriebenen BLE-Advertising-Signals mit einer Advertising-Nachricht.

Beispielsweise kann das BLE-Advertising-Signal wie folgt gebildet sein:
Universally Unique Identifier (UUID): 16 Bytes
   Unique Scheme Identifier - Part 1 (4 Bytes): Eindeutige Kennung des Betreiber-Schemes (Dienstleistungsbetreiberkennung), welche von Endgeräten als Identifikation beim Scan verwendet werden kann
   User-ID (4 Bytes) (Nutzerkennung): Bei der Registrierung zugewiesen und beim Check-In validiert
   Zeit (2 Bytes) (Zeitstempel): Minuten seit Beginn des Arbeitstages (konfiguriert in der
      Konfigurationsdatei)
   Status (2 Bytes) (z.B. verifizierter Nutzungszustand): Status Bits des Endgeräts
      - Signal Typ (z.B. Status) (4 Bits)
      - Station Flag (1 Bit)
      - Sensorflags (7 Bits)
         - GPS (0/1)
         - Speed (0/1)
         - BLE (0/1)
         - WLAN (0/1)
         - GSM (0/1)
         - Motion Detection (0/1)
         - User Beacon (bzw. Advertising-Signal) (0/1)
      - Signalhistorie (4 Bits): Wird für gleiche User ID und Sequenznummer hochgezählt. Befähigt die virale Verbreitung des gleichen Signals (User-ID und Sequenznummer identisch). Bei neuem Zeitstempel wird die Historie auf "0" gesetzt.
   Unique Scheme Identifier - Part 2 (4 Bytes): Eindeutige Kennung des Betreiber-Schemes (Dienstleistungsbetreiberkennung), welche von Endgeräten als Identifikation beim Scan verwendet werden kann
Major und Minor: 4 Bytes
   Sequenznummer (32 Bits): Sequenznummer des Ereignisses (hochgezählt für jedes Ereignis)

Die Schnittstellen 118, 120 können insbesondere ferner ein Sensorelement umfassen oder dieses bilden und insbesondere dem Empfangsmodul 104 der Dienstleistungsanwendung 100 jeweils mindestens einen Nutzungsdatensatz zur Verfügung stellen, wie ein Sensordatum (also; Sensorwert, z.B. anliegende (WLAN- bzw. Bluetooth-) Signalstärke), eine erhaltene Advertising-Nachricht oder eine empfangene Kennung eines Sendefelds von z.B. einem (dem mobilen Endgerät 102 bzw. der Dienstleistungsanwendung 100 bekannten) Sender.

Darüber hinaus kann das mobile Endgerät 102 mindestens ein/e Mobilfunkschnittstelle 122 bzw. Mobilfunkkommunikationselement 122 aufweisen. Die Mobilfunkschnittstelle 122 kann eingerichtet sein zum Kommunizieren mit dem Backendsystem, insbesondere zum Aussenden der genannten Nutzungsprotokollnachricht. Beispielsweise kann die Nutzungsprotokollnachricht von dem zweiten Sendemodul 114 generiert und zum Bewirken einer Aussendung an die Mobilfunkschnittstelle 122 übergeben werden.

Die mindestens eine Mobilfunkschnittstelle 122 kann ein Sensorelement umfassen oder dieses bilden und insbesondere dem Empfangsmodul 104 der Dienstleistungsanwendung 100 mindestens einen Nutzungsdatum zur Verfügung stellen, wie ein Sensordatum (z.B. anliegende Signalstärke eines empfangenen Mobilfunkfeldes).

Das mobile Endgerät 102 weist im vorliegenden Ausführungsbeispiel zudem mindestens einen Positionssensor 124 auf, beispielsweise einen GPS-Sensor 124. Der Positionssensor 124 ist insbesondere eingerichtet zum Empfangen von mindestens einem Positionssignal (z.B. GPS-Signal). Basierend auf dem mindestens einen Positionssignal kann eine geographische Position des mobilen Endgeräts 102, zum Beispiel in Form von GPS-Koordinaten oder dergleichen, bestimmt werden. Der mindestens eine Positionssensor kann insbesondere dem Empfangsmodul 104 ein Nutzungsdatum zur Verfügung stellen, insbesondere in Form eines Sensordatums, wie eine augenblickliche bestimmte geographische Position und/oder die Signalstärke des mindestens einen empfangbaren Positionssignals.

Wie zu erkennen ist, kann ein mobiles Endgerät 102 eine Mehrzahl weiterer Sensorelemente 126, 128 umfassen, beispielsweise einen Beschleunigungssensor 126 und einen Geschwindigkeitssensor 128. Auch die weiteren genannten Sensorelemente 126, 128 können dem Empfangsmodul 104 jeweils ein Nutzungsdatum zur Verfügung stellen, insbesondere in Form eines jeweils erfassten Sensordatums, wie ein Beschleunigungsdatum bzw. ein Geschwindigkeitsdatum.

Es versteht sich, dass weitere evtl. vorhandene Sensorelemente des mobilen Endgeräts (weitere) erfasste Sensorparameter dem Empfangsmodul zur Verfügung stellen können.

Die Funktionsweise der Dienstleistungsanwendung 100 wird nachfolgend näher mit den weiteren Figuren erläutert.

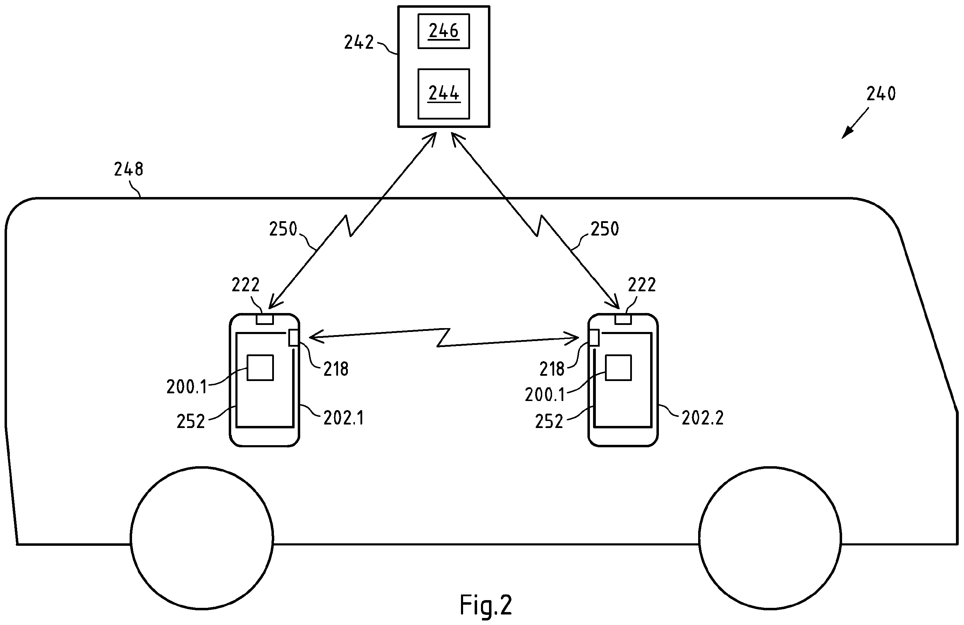

Die Figur 2 zeigt eine schematische Ansicht eines Ausführungsbeispiels eines Dienstleistungssystems 240 gemäß der vorliegenden Anmeldung. Vorliegend ist das Dienstleistungssystem 240 ein Transportsystem 240 mit mindestens einer Transportvorrichtung 248 (vorliegend lediglich beispielhaft in Form eines Busses 248). Es versteht sich, dass ein Transportsystem über eine Vielzahl von (unterschiedlichen) Transportvorrichtungen verfügen kann.

Die Transportvorrichtung 248 (insbesondere der Innenraum der Transportvorrichtung 248) bildet im vorliegenden Ausführungsbeispiel den Dienstleistungsraum 248, also den Bereich 248, in dem eine Nutzerberechtigung für die Anwesenheit eines Nutzers erforderlich ist.

Das Transportsystem 240 umfasst mindestens ein Backendsystem 242 (z.B. in Form eines oder mehrerer (verteilter) Sever). Das Backendsystem 242 umfasst mindestens ein Empfangsmodul 244 (vorzugsweise ein bidirektionales Kommunikationsmodul 244) und mindestens ein Auswertemodul 246. Es versteht sich, dass ein Backendsystem 242 weitere Module umfassen kann, wie eine Datenbank zum Speichern von Nutzerkonten von registrierten Nutzern, ein Abrechnungsmodul zum Abrechnen einer durchgeführten Transportdienstleistung etc.

Das Empfangsmodul 244 ist insbesondere eingerichtet zum Empfangen einer Mehrzahl von Nutzungsprotokollnachrichten von einer Mehrzahl von mobilen Endgeräten 202.1, 202.2.

Beispielhaft sind in dem vorliegenden Ausführungsbeispiel zwei mobile Endgeräte 202.1, 202.2 dargestellt, die jeweils eine Dienstleistungsanwendung 200.1, 200.2 implementiert haben. Die Dienstleistungsanwendung 200.1, 200.2 kann insbesondere im Wesentlichen entsprechend der Dienstleistungsanwendung nach Figur 1 gebildet sein (zu Gunsten einer besseren Übersicht wurde auf eine Darstellung der einzelnen Module verzichtet). Ein mobiles Endgerät 200.1, 200.2 kann zudem insbesondere im Wesentlichen entsprechend dem mobilen Endgerät nach Figur 1 gebildet sein (zu Gunsten einer besseren Übersicht wurde auf eine Darstellung einer Mehrzahl der Schnittstellen/Sensorelemente verzichtet). Die Dienstleistungsanwendung 200.1, 200.2 kann beispielsweise über ein Touchdisplay 252 Nutzereingaben von einem Nutzer detektieren, wie eine Eincheck-Aktion.

Wie bereits beschrieben wurde, kann in einem verifizierten Nutzungszustand einer ersten Dienstleistungsanwendung 200.1 die Dienstleistungsanwendung 200.1 ein Aussenden einer Advertising-Nachricht in Form eines Advertising-Signals durch eine Bluetooth-Schnittstelle 218 bewirken, insbesondere eines BLE-Advertising-Signals. Ein in Reichweite befindliches zweites mobiles Endgerät 202.2 kann das BLE-Advertising-Signal empfangen und die darauf installierte zweite Dienstleistungsanwendung 200.2 kann die Advertising-Nachricht auswerten, um zumindest zu detektieren, ob sich das zweite mobile Endgerät 202.2 in einem Dienstleistungsraum 248 befindet (oder nicht). Hierbei zeigt die Advertising-Nachricht aus Sicht der zweiten Dienstleistungsanwendung 200.2 zumindest an, dass es die erste Dienstleistungsanwendung 200.1 in der Nähe gibt (nämlich in der Sendereichweite eines BLE-Signals) und dass sich diese erste Dienstleistungsanwendung 200.1 in einem verifizierten Nutzungszustand befindet. Daraus kann die zweite Dienstleistungsanwendung 200.2 schließen, dass sie sich in dem gleichen Nutzungszustand befindet wie die erste Dienstleistungsanwendung 200.1. Zudem kann die zweite Dienstleistungsanwendung 200.2 insbesondere die erhaltene Advertising-Nachricht weiterleiten.

Die jeweilige Mobilfunkschnittstelle 222 kann insbesondere in zuvor beschriebener Weise Nutzungsprotokollnachrichten über ein Mobilfunknetz 250 an das mindestens eine Empfangsmodul 244 senden. Die mindestens eine erhaltene Nutzungsprotokollnachricht kann von dem Auswertemodul 246 des Backendsystems 242 ausgewertet werden, um insbesondere die von dem aussendenden mobilen Endgerät 202.1, 202.2 (bzw. dessen Nutzer) zurückgelegte Fahrtenkette zu bestimmen.

Besonders bevorzugt kann das Auswertemodul 246 eingerichtet sein zum Ermitteln der Fahrtenkette von einem zweiten mobilen Endgerät 200.2, basierend auf der mindestens einen zweiten Nutzungsprotokollnachricht des zweiten mobilen Endgeräts 202.2 wobei das zweite mobile Endgerät 202.2 die mindestens eine zweite Nutzungsprotokollnachricht erst dann an das Backendsystem 242 sendet, wenn es von dem einem, in einem verifizierten Nutzungszustand befindlichen, mobilen Endgerät 202.1 mindestens eine Advertising-Nachricht empfangen hat.

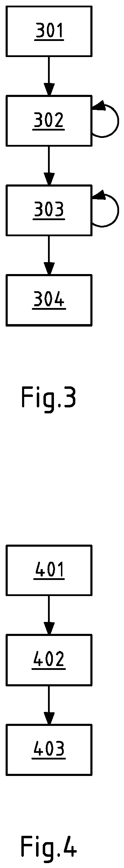

Die Figur 3 zeigt ein Diagramm eines Ausführungsbeispiels eines Verfahrens gemäß der vorliegenden Anmeldung zum Betreiben einer auf einem mobilen Endgerät (vgl. z.B. Fig. 1) installierten Dienstleistungsanwendung (vgl. z.B. Fig. 1) für die Inanspruchnahme einer Dienstleistung, insbesondere einer Transportdienstleistung (vgl. z.B. Fig. 2).

In einem ersten Schritt 301 erfolgt ein Erhalten, durch ein Empfangsmodul der Dienstleistungsanwendung, mindestens eines Nutzungsdatensatzes. Bei einer nach dem CIBO-Verfahren arbeitenden Dienstleistungsanwendung kann insbesondere zunächst als Nutzungsdatensatz eine Information über die Detektion einer Eincheck-Aktion erhalten werden. Der Schritt 301 kann vorzugsweise nahezu kontinuierlich erfolgen. Insbesondere kann eine Vielzahl von vorgenannten Sensordaten und/oder empfangenen Advertising-Nachrichten dem Empfangsmodul der Dienstleistungsanwendung als Nutzungsdatensätze nahezu kontinuierlich bereitgestellt werden.

In dem Detektionsschritt 302 kann zunächst, durch ein Detektionsmodul der Dienstleistungsanwendung, detektiert werden, ob sich das mobile Endgerät augenblicklich in einem Dienstleistungsraum befindet (oder nicht). Dieser Schritt 302 kann wiederholend bzw. nahezu kontinuierlich durchgeführt werden.

Insbesondere kann der mindestens eine erhaltene Nutzungsdatensatz mit mindestens einem vorgegebenen und zugehörigen Basis-Nutzungsreferenzkriterium verglichen werden (z.B.: Vorliegen einer detektierten Eincheck-Aktion (oder nicht); Erfüllen eines vorgegebenen Basis-Referenzparameterbereichs durch einen erhaltenen Sensordatensatz (also Sensorwert) (oder nicht); Vorliegen einer Advertising-Nachricht von einem weiteren mobilen Endgerät (oder nicht); und/oder dergleichen). In diesem Schritt kann insbesondere die Güte einer erhaltenen Advertising-Nachricht in zuvor beschriebener Weise ausgewertet werden.

Stellt das Detektionsmodul fest, dass sich das mobile Endgerät und damit der Nutzer mit zumindest einer ersten Zuverlässigkeitsstufe (entsprechend dem mindestens einen Basis-Nutzungsreferenzkriterium) in einen Dienstleistungsraum befinden, dann kann das Detektionsmodul die Dienstleistungsanwendung in einen Basis-Nutzungszustand setzen.

Wenn die Dienstleistungsanwendung sich im Basis-Nutzungszustand befindet, folgt in einem Schritt 303 ein Bestimmen, durch ein Verifizierungsmodul der Dienstleistungsanwendung, eines verifizierten Nutzungszustands, basierend auf dem mindestens einen erhaltenen Nutzungsdatensatz und mindestens einem vorgegebenen Verifizierungsreferenzkriterium. Dieser Schritt 303 kann wiederholend bzw. nahezu kontinuierlich durchgeführt werden.

In dem Schritt 303 wird insbesondere geprüft, ob das mindestens eine Verifizierungsreferenzkriterium erfüllt ist oder nicht. Beispielsweise kann ein Bestimmen des verifizierten Nutzungszustands ein Detektieren eines Überschreitens einer vorgegebenen Mindestzeitdauer durch die Nutzungszeitdauer umfassen (wie bereits beschrieben wurde). Auch kann geprüft werden, ob ein erhaltener Nutzungsdatensatz eine von einem Backendsystem verifizierte Nutzungsinformation und/oder eine von einer Inspektionsvorrichtung verifizierte Nutzungsinformation ist. Auch können die erhaltenen Sensordaten überprüft werden und es kann festgestellt werden, ob sie innerhalb eines vorgegebenen Verifizierungsparameterbereichs liegen (oder nicht). Auch kann aufgrund der Sensordaten, wie Mobilfunksignalstärke und Positionssignalstärke, festgestellt werden, ob ein Transportfahrzeug in einen Tunnel oder dergleichen gefahren ist, wie zuvor beschrieben wurde.

Es versteht sich, dass die Schritte 302 und 303 zumindest teilweise parallel durchgeführt werden können. Zudem versteht es sich, dass bei Bestimmung des verifizierten Nutzungszustands sich die Dienstleistungsanwendung auch automatisch in einem Basis-Nutzungszustand befindet.

In einem Schritt 304 erfolgt ein Bewirken, durch ein erstes Sendemodul der Dienstleistungsanwendung, eines Aussendens, durch das mobile Endgerät, eines Advertising-Signals mit einer Advertising-Nachricht, wenn ein verifizierter Nutzungszustand in Schritt 303 bestimmt wurde. Insbesondere wird eine Advertising-Nachricht nur dann ausgesendet, wenn bestimmt wurde, dass sich das mobile Endgerät mit einer zweiten Zuverlässigkeitsstufe (entsprechend dem mindestens einen Verifizierungsreferenzkriterium) in einen Dienstleistungsraum befindet. Insbesondere kann ein periodisches Versenden der Advertising-Nachricht erfolgen.

Die Figur 4 zeigt ein Diagramm eines weiteren Ausführungsbeispiels eines Verfahrens gemäß der vorliegenden Anmeldung.

In Schritt 401 kann ein Generierungsmodul einer Dienstleistungsanwendung, die sich zumindest in einem Basis-Nutzungszustand befindet, mindestens einen Nutzungsprotokolldatensatz generieren, wie zuvor beschrieben wurde.

In Schritt 402 kann ein zweites Sendemodul der Dienstleistungsanwendung ein Aussenden, durch das mobile Endgerät, einer Nutzungsprotokollnachricht, enthaltend den mindestens einen generierten Nutzungsprotokolldatensatz, an ein Backendsystem bewirken, wie zuvor beschrieben wurde.

Die mindestens eine erhaltene Nutzungsprotokollnachricht kann von einem Auswertemodul des Backendsystems in Schritt 403 ausgewertet werden, um insbesondere die von dem aussendenden mobilen Endgerät zurückgelegte Fahrtenkette zu bestimmen. Besonders bevorzugt kann das Auswertemodul in Schritt 403 eingerichtet sein zum Ermitteln der Fahrtenkette von einem ersten mobilen Endgerät, basierend auf der mindestens einen zweiten Nutzungsprotokollnachricht des zweiten mobilen Endgeräts wobei das zweite mobile Endgerät die mindestens eine zweite Nutzungsprotokollnachricht erst dann an das Backendsystem sendet, wenn es von einem ersten, in einem verifizierten Nutzungszustand befindlichen, mobilen Endgerät mindestens eine Advertising-Nachricht empfangen hat.

Es versteht sich, dass die Schritte der Verfahren nach Figuren 3 und 4 zumindest teilweise parallel durchgeführt und insbesondere die entsprechenden Verfahren kombiniert werden können.

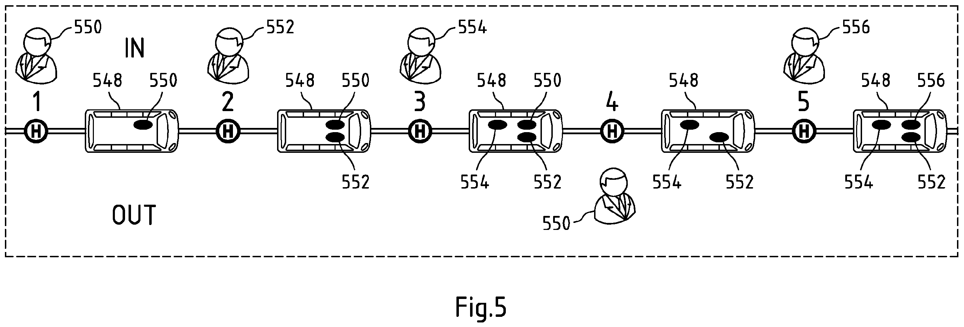

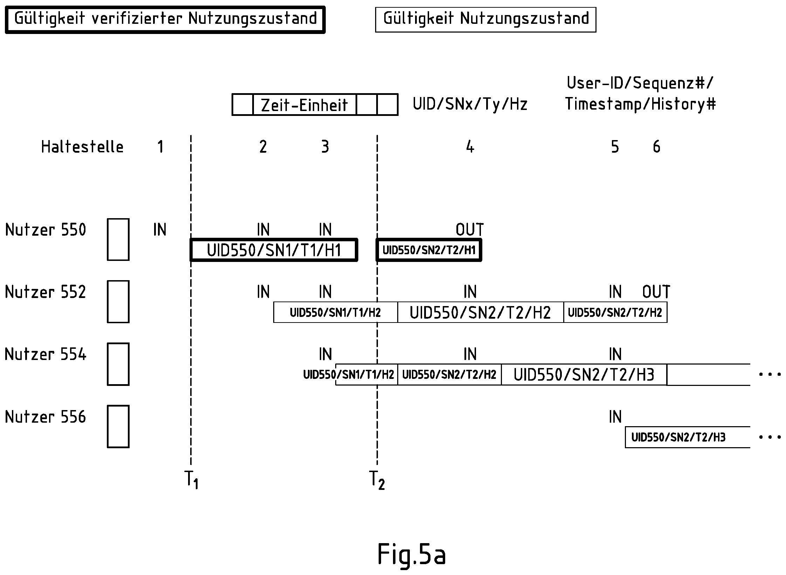

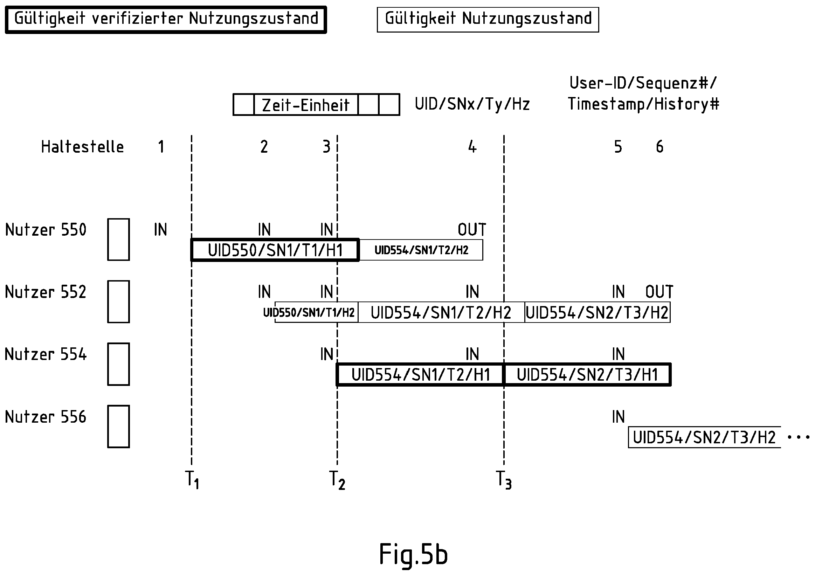

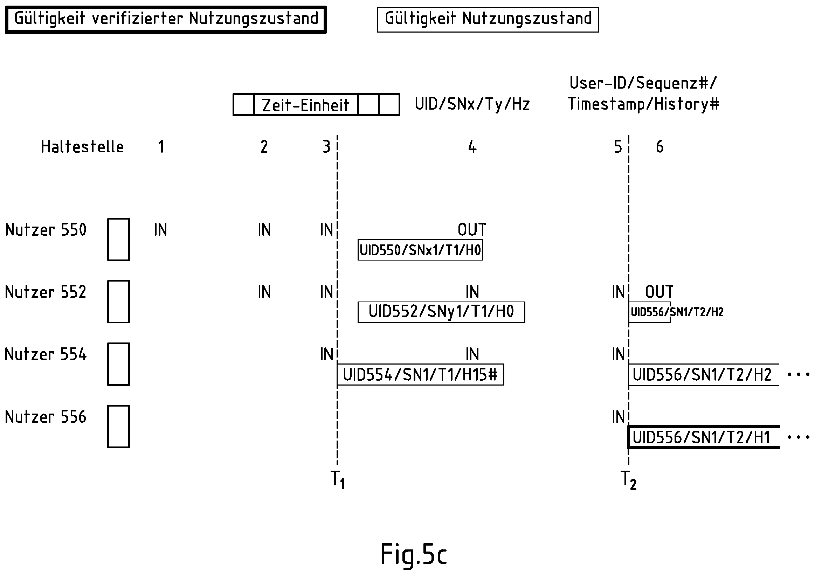

Figur 5 zeigt ein schematisches Szenario beispielhafter (teilweise nur ausschnittsweise dargestellter) Fahrtenketten, die von Nutzern 550 bis 556 zumindest teilweise mit einer Transportvorrichtung 548 zurückgelegt werden. Die Bezugszeichen 1 bis 5 geben Haltestellen an, an denen Nutzer 550 bis 556 zusteigen (siehe obere mit IN bezeichnete Bildhälfte) und/oder den Dienstleistungsraum 548 verlassen (siehe untere mit OUT bezeichnete Bildhälfte).

So steigt an der ersten Haltestelle 1 ein erster Nutzer 550 in das Fahrzeug 548 ein und verlässt das Fahrzeug 548 wieder an der Haltestelle 4. An der zweiten Haltestelle 2 steigt ein zweiter Nutzer 552 zu, der an einer (nicht gezeigten Haltestelle 6 aussteigt). An der dritten Haltestelle 3 steigt ein dritter Nutzer 554 zu. An der fünften Haltestelle 5 steigt ein vierter Nutzer 556 zu. Bei diesem beispielhaften Szenario wird vorausgesetzt, dass jeder Nutzer ein (nicht gezeigtes) mobiles Endgerät mit einer Dienstleistungsanwendung entsprechend der Figur 1 mit sich führt.

Nachfolgend werden das anmeldungsgemäße Verfahren und die Vorteile des anmeldungsgemäßen Verfahrens näher mit den Figuren 5a bis 5c beschrieben, die beispielhafte Anwendungsfälle des anmeldungsgemäßen Verfahrens zeigen. In den Figuren 5a bis 5c werden insbesondere die Signalverläufe von ausgesendeten Advertising-Signalen beispielhaft dargestellt. Beispielhaft wird hierbei von folgenden Rahmenbedingungen ausgegangen: Die Gültigkeitsdauer des verifizierten Nutzungszustands beträgt maximal N Zeiteinheiten, beispielsweise 5 Minuten. Die Zeitdauer, während welcher ein Advertising-Signal (auch User Beacon genannt) wiederholt, insbesondere periodisch wiederholt, ausgesendet werden kann, ist identisch mit der Gültigkeitsdauer des verifizierten Nutzungszustands. Nach jedem Aussenden eines Advertising-Signals geht das sich in einem verifizierten Nutzungszustand befindliche mobile Endgerät (wieder) in einen "Hören" Modus, um evtl. andere Signale zu empfangen.

Eine Advertising-Nachricht enthält vorliegend folgende Advertising-Parameter: Eine User-ID (UID), eine Sequenznummer (SNx) (z.B.: die zum Backendsystem übermittelte eindeutige Seq.#, unter der die protokollierten Daten übermittelt wurden), einen (zuvor beschriebenen) Zeitstempel (Ty), (z.B. Minuten nach Betriebstag-Beginn, welche im Config File in jeder APP bei Login/Check-In übernommen wird) und mindestens einen historischen Parameter (Hz). Es versteht sich, dass bei anderen Varianten weitere oder andere Daten enthalten sein können.

In dem Anwendungsfall nach Figur 5a stellt die Dienstleistungsanwendung des mobilen Endgeräts des ersten Nutzers 550 zwischen den Stationen 1 und 2 den verifizierten Nutzungszustand fest (wie zuvor beschrieben wurde). Anders ausgedrückt, kann das mobile Endgeräts des ersten Nutzers 550 ein "Referenz Beacon" für andere Endgeräte werden. Die entsprechende Dienstleistungsanwendung bewirkt in zuvor beschriebener Weise ein Aussenden eines ersten Advertising-Signals. Die ausgesendete Advertising-Nachricht (UID550/SN1/T1/H1) wird von dem mobilen Endgerät des zweiten Nutzers 552 empfangen, und die entsprechende Dienstleistungsanwendung bewirkt eine Weiterleitung der Advertising-Nachricht (UID550/SN1/T1/H2).

Die erste Advertising-Nachricht wird zudem von dem mobilen Endgerät des dritten Nutzers 554 empfangen, und die entsprechende Dienstleistungsanwendung bewirkt eine Weiterleitung der Advertising-Nachricht (UID550/SN1/T1/H2).

Dass es sich bei den weitergeleiteten Advertising-Nachrichten (UID550/SN1/T1/H2) jeweils um eine weiteregeleitete Nachricht handelt, kann den historischen Parametern H2 (im Vergleich zu H1 der originalen Advertising-Nachricht) entnommen werden. Insbesondere wird in den historischen Parametern für einen Empfänger deutlich, dass es sich um eine weitergeleitete Advertising-Nachricht handelt.

Ferner ist zu erkennen, dass zwischen den Stationen 3 und 4 das mobile Endgerät des ersten Nutzers 550 eine weitere Advertising-Nachricht (UID550/SN2/T2/H1) mit einer geänderten Sequenznummer SN2 (und einem geänderten Zeitstempel T2) aussendet, beispielsweise aufgrund eines zuvor beschriebenen Ereignisses. In zuvor beschriebener Weise leiten die empfangenden mobilen Endgeräte des zweiten und dritten Nutzers 552, 554 zunächst die Nachricht (UID550/SN2/T2/H2) weiter.

Hierbei sendet das Endgerät des zweiten Nutzers 552 die weitergeleitete Advertising-Nachricht (z.B. u.a. basierend auf einer internen Prüfung der eigenen Sensorparameter) noch weiter aus, auch wenn der erste Nutzer 550 bereits ausgestiegen ist. Das mobile Endgerät des dritten Nutzers 554 hingegen empfängt nur noch die Advertising-Nachricht (UID550/SN2/T2/H2) des zweiten Nutzers und leitet diese weiter als Nachricht (UID550/SN2/T2/H3). Hierbei zeigen die geänderten historischen Parameter H3 wiederum, dass es sich um eine (mehrfach) weitergeleitete Advertising-Nachricht handelt.

Das mobile Endgerät des vierten Nutzers 556 empfängt die Advertising-Nachricht (UID550/SN2/T2/H2) von dem zweiten Nutzer 552 und leitet diese weiter (obwohl der ursprüngliche Sender 552 das Fahrzeug 548 bereits verlassen hat).

Insbesondere hat in dem beschriebenen Anwendungsfall kein anderer Nutzer 552, 554, 556 einen höherwertigen verifizierten Zustand als der erste Nutzer 550, und der verifizierte Nutzungszustand der ersten Dienstleistungsanwendung des ersten Nutzers 550 kann weitervererbt werden, auch wenn der Nutzer 550 selbst bzw. dessen Dienstleistungsanwendung nicht mehr in dem Dienstleistungsraum 548 ist.

Hinsichtlich der Figur 5b wird zur Vermeidung von Wiederholungen im Wesentlichen nur der Unterschied zu dem Beispiel nach Figur 5a beschrieben.

Die Dienstleistungsanwendung des dritten mobilen Endgeräts des dritten Nutzers 554 empfängt die Advertising-Nachricht (UID550/SN1/T1/H1) des ersten Nutzers und wertet diese aus, beispielsweise basierend auf eigenen Sensordaten. Auch kann die dritte Dienstleistungsanwendung beispielsweise eine von einem Backendsystem verifizierte Nutzungsinformation und/oder eine von einer Inspektionsvorrichtung verifizierte Nutzungsinformation vorliegen haben.

Die dritte Dienstleistungsanwendung kommt bei der Auswertung zu dem Ergebnis, dass sie mit einer höheren Sicherheit (bzw. höheren Zuverlässigkeitsstufe) als die erste Dienstleistungsanwendung bestimmen kann, dass sie sich in einem Dienstleistungsraum befindet. Daraufhin bewirkt die dritte Dienstleistungsanwendung keine Weiterleitung der empfangenen Advertising-Nachricht, sondern bewirkt eine Aussendung einer eigenen (höherwertigen) Advertising-Nachricht (UID554/SN1/T2/H1). Diese wird von den weiteren Endgeräten in zuvor beschriebener Weise empfangen und insbesondere als Advertising-Nachricht (UID554/SN1/T2/H2) weitergeleitet.

Hinsichtlich der Figur 5c wird zur Vermeidung von Wiederholungen (wieder) im Wesentlichen nur der Unterschied zu den Beispielen nach Figur 5a - 5b beschrieben.

Der erste und zweite Nutzer 550, 552 steigen in das Fahrzeug 548 ein und die jeweiligen Dienstleistungsanwendungen erhalten jeweils Sensordaten, die das mindestens eine Basis-Nutzungsreferenzkriterium erfüllen, also ausreichend sind für einen Basis-Nutzungszustand (auch "System-Be-In"-Zustand genannt). Die erhaltenen Sensorparameter erfüllen vorliegend aber nicht das mindestens eine Verifizierungsreferenzkriterium. Daher wird ein Aussenden von Advertising-Signalen nicht bewirkt.

Der dritte Nutzer 554 steigt ein, und die Dienstleistungsanwendung des dritten Nutzers 554 erhält Sensordaten, die (auch) das mindestens eine Basis-Nutzungsreferenzkriterium nicht erfüllen (z.B. nach einer detektierten Check-in-Aktion), also nicht ausreichend sind für einen Basis-Nutzungszustand ("System-Be-In"-Zustand).

Daher erfragt die Dienstleistungsanwendung des dritten Nutzers 554 den Nutzungszustand von möglichen weiteren Nutzern 550, 552 bzw. Dienstleistungsanwendungen mit einer Anfrage (UID554/SN1/T1/H15#). Die mobilen Endgeräte des ersten und zweiten Nutzers 550, 552 empfangen die Anfrage (UID554/SN1/T1/H15#), und die jeweilige Dienstleistungsanwendung bewirkt ein Aussenden einer Antwort (UID550/SNx1/T1/H0) bzw. (UID552/SNy1/T1/H0) mit dem jeweiligen aktuellen Status (vorliegend Basis-Nutzungszustand). Der jeweilige historische Parameter H0 weist vorliegend darauf hin, dass kein verifizierter Nutzungszustand vorliegt.

Basierend auf den erhaltenen Antworten wertet die dritte Dienstleistungsanwendung die Antworten aus und begibt sich in einen Basis-Nutzungszustand. An der nächsten Haltestelle steigt der vierte Nutzer 556 mit einer Dienstleistungsanwendung in einem verifizierten Nutzungszustand ein und bewirkt ein Aussenden einer Advertising-Nachricht (wie zuvor beschrieben wurde).

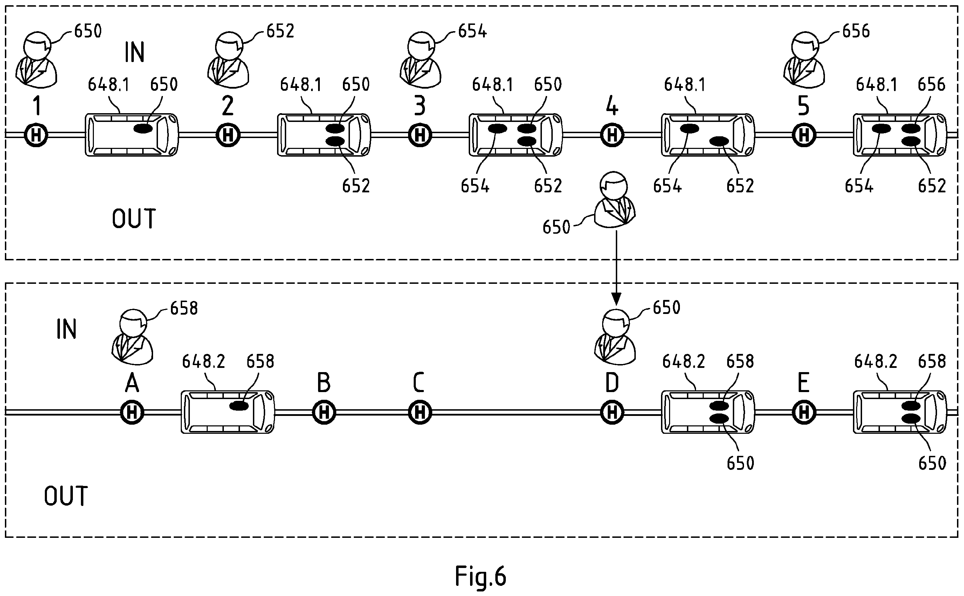

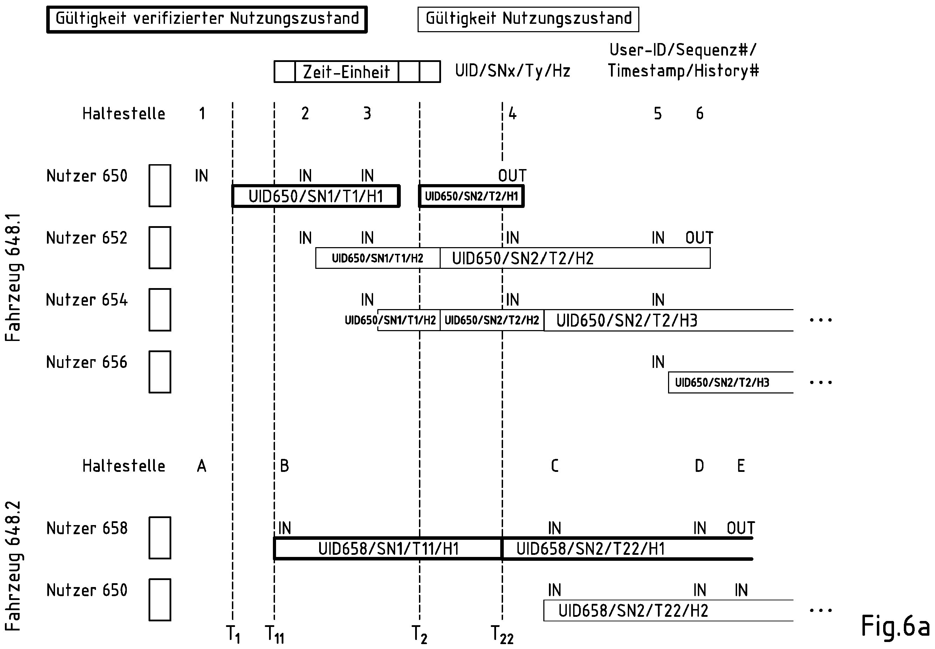

Die Figur 6 zeigt ein weiteres schematisches Szenario einer Transportdienstleistung, bei dem ein Ausführungsbeispiel eines Verfahrens gemäß der vorliegenden Anmeldung anwendbar ist. Insbesondere wird das Szenario nach Figur 5 durch ein weiteres Fahrzeug 648.2 ergänzt, in das der erste Nutzer 650 umsteigt. In dem weiteren Fahrzeug 648.2 ist bereits ein fünfter Nutzer 658 an der Haltestelle A eingestiegen.

Hinsichtlich der weiteren Details der Figur 6 wird zur Vermeidung von Wiederholungen auf die Figur 5 verweisen.

Die Figur 6a zeigt beispielhafte Signalverläufe von Advertising-Signalen gemäß einem beispielhaften Anwendungsfall bei dem Szenario nach Figur 6. Zur Vermeidung von Wiederholungen wird insbesondere auf das Beispiel nach Figur 5a verwiesen.

Im Unterschied hierzu steigt der erste Nutzer 650 von dem ersten Fahrzeug 648.1 in das zweite Fahrzeug 648.2 an der Haltestelle 4 bzw. D um. In diesem zweiten Fahrzeug 648.2 ist bereits ein fünfter Nutzer 658 mit einer fünften Dienstleistungsanwendung in einem verifizierten Nutzungszustand, so dass bereits bevor der Nutzer 650 zusteigt eine Aussendung eines entsprechenden Advertising-Signals, enthaltend eine Advertising-Nachricht (UID658/SN2/T22/H1), durch die fünfte Dienstleistungsanwendung bewirkt wird.

Die erste Dienstleistungsanwendung wertet die erhaltene Advertising-Nachricht (wie zuvor beschrieben wurde) des fünften Nutzers 658 aus. Die erste Dienstleistungsanwendung kommt bei der Auswertung zu dem Ergebnis, dass die erhaltene Advertising-Nachricht (UID658/SN2/T22/H1) höherwertig ist und leitet daraufhin die erhaltene Advertising-Nachricht (UID658/SN2/T22/H2) weiter.

Anmeldungsgemäß kann eine Sicherung der Fahrtberechtigung zur bestmöglichen Rekonstruktion der Fahrtenketten und/oder Verhinderung eines nicht zutreffenden "System-Be-Out" erzielt werden. Endgeräte können wie eine Fahrzeug-Infrastruktur genutzt werden. Ein Advertisement von Endgeräten (z.B. Bluetooth- oder WLAN) kann erfolgen, bei dem relevante Informationen bzgl. Anwesenheitsmeldungen (u.a. System-Be-In, Zeit, Ort) erzeugt oder weitergeben werden. Durch ein virales Signalnetz aus Endgeräten kann insbesondere ein System-Be-In ohne Fahrzeuginfrastruktur und ohne anliegende Signale ermöglicht werden.

## Patentansprüche

1. Verfahren zum Betreiben einer auf einem mobilen Endgerät (102, 202.1, 202.2) installierten Dienstleistungsanwendung (100, 200.1, 200.2) für die Inanspruchnahme einer Dienstleistung, insbesondere einer Transportdienstleistung, umfassend:
- Erhalten, durch ein Empfangsmodul (104) der Dienstleistungsanwendung (100, 200.1, 200.2), mindestens eines Nutzungsdatensatzes,
- Bestimmen in einem Basis-Nutzungszustand der Dienstleistungsanwendung (100, 200.1, 200.2), durch ein Verifizierungsmodul (106) der Dienstleistungsanwendung (100, 200.1, 200.2), eines verifizierten Nutzungszustands, basierend auf dem mindestens einen erhaltenen Nutzungsdatensatz und mindestens einem vorgegebenen Verifizierungsreferenzkriterium, wobei der Basis-Nutzungszustand ein System-Be-In-Zustand ist, und
- wenn ein verifizierter Nutzungszustand bestimmt wurde, Bewirken, durch ein erstes Sendemodul (108) der Dienstleistungsanwendung (100, 200.1, 200.2), eines Aussendens, durch das mobile Endgerät (102, 202.1, 202.2), eines Advertising-Signals mit einer Advertising-Nachricht, wobei die Advertising-Nachricht anzeigt, dass die Dienstleistungsanwendung einen verifizierten Nutzungszustand bestimmt hat,
- Generieren, durch ein Generierungsmodul (112) der Dienstleistungsanwendung (100, 200.1, 200.2), mindestens eines Nutzungsprotokolldatensatzes zumindest während des Basis-Nutzungszustands über die Nutzung einer Dienstleistung,
- Bewirken, durch ein zweites Sendemodul (114) der Dienstleistungsanwendung (100, 200.1, 200.2), eines Aussendens, durch das mobile Endgerät (102, 202.1, 202.2), einer Nutzungsprotokollnachricht, enthaltend den mindestens einen generierten Nutzungsprotokolldatensatz, an ein Backendsystem (242),
- Empfangen, durch mindestens ein Empfangsmodul (244) des Backendsystems (242), einer Mehrzahl von Nutzungsprotokollnachrichten von einer Mehrzahl von mobilen Endgeräten (102, 202.1, 202.2),
- Ermitteln, durch mindestens ein Auswertemodul (246) des Backendsystems (242), einer ersten Fahrtenkette für ein erstes mobiles Endgerät (102, 202.1, 202.2), das einen verifizierten Nutzungszustand hat, basierend auf mindestens einer ersten Nutzungsprotokollnachricht des ersten mobilen Endgeräts (102, 202.1, 202.2),
- Ermitteln, durch das mindestens eine Auswertemodul (246) des Backendsystems (242), einer zweiten Fahrtenkette für ein zweites mobiles Endgerät (102, 202.1, 202.2), das einen nicht-verifizierten Nutzungszustand hat, basierend auf mindestens einer zweiten Nutzungsprotokollnachricht des zweiten mobilen Endgeräts (102, 202.1, 202.2), enthaltend mindestens einen zweiten Nutzungsprotokolldatensatz,
wobei das Generierungsmodul (112) der Dienstleistungsanwendung (100, 200.1, 200.2) des zweiten mobilen Endgeräts (102, 202.1, 202.2) den mindestens einen zweiten Nutzungsprotokolldatensatz erst dann generiert, wenn das zweite mobile Endgerät (102, 202.1, 202.2) von dem ersten mobilen Endgerät (102, 202.1, 202.2) mindestens eine Advertising-Nachricht empfangen hat.

2. Verfahren nach Anspruch 1, **dadurch gekennzeichnet, dass**
- die Advertising-Nachricht zumindest einen der folgenden Advertising-Parameter umfasst:
- mindestens eine Nutzerkennung,
- mindestens eine Dienstleistungsbetreiberkennung,
- mindestens einen Zeitstempel,
- mindestens eine Sequenznummer,
- mindestens ein historisches Datum des Advertising-Signals,
- mindestens ein Sensorflag, kennzeichnend mindestens ein Sensorelement (118, 120, 122, 124, 126, 128) des das Advertising-Signal aussendenden mobilen Endgeräts (102, 202.1, 202.2),
- eine von einem Backendsystem (242) und/oder einer Inspektionsvorrichtung verifizierte Nutzungsinformation.

3. Verfahren nach einem der vorherigen Ansprüche, **dadurch gekennzeichnet, dass** das Verfahren umfasst:
- Detektieren, durch ein Detektionsmodul (110) der Dienstleistungsanwendung (100, 200.1, 200.2), einer Anwesenheit des mobilen Endgeräts (102, 202.1, 202.2) in einem Dienstleistungsraum (248, 548, 648.1, 648.2) in einem Detektionsschritt, und
- Setzen der Dienstleistungsanwendung (100, 200.1, 200.2) in den Basis-Nutzungszustand, wenn die Anwesenheit des mobilen Endgeräts (102, 202.1, 202.2) in dem Dienstleistungsraum (248, 548, 648.1, 648.2) detektiert wird
- wobei der Detektionsschritt insbesondere zu bestimmten Zeitpunkten durchgeführt wird, insbesondere bevorzugt regelmäßig.

4. Verfahren nach einem der vorherigen Ansprüche, **dadurch gekennzeichnet, dass**
- das Detektieren der Anwesenheit des mobilen Endgeräts (102, 202.1, 202.2) in dem Dienstleistungsraum (248, 548, 648.1, 648.2) ein Empfangen mindestens eines durch ein weiteres mobiles Endgerät (102, 202.1, 202.2) ausgesendeten Advertising-Signals mit einer Advertising-Nachricht umfasst.

5. Verfahren nach Anspruch 4, **dadurch gekennzeichnet, dass**
- in dem Detektionsschritt ein Detektieren der Anwesenheit des mobilen Endgeräts (102, 202.1, 202.2) in dem Dienstleistungsraum (248, 548, 648.1, 648.2) ein Auswerten des mindestens einen empfangenen Advertising-Signals umfasst, indem mindestens einer der Auswerteschritte durchgeführt wird, aus der Gruppe, umfassend:
- Auswerten der Anzahl der von demselben weiteren mobilen Endgerät (102, 202.1, 202.2) empfangenen Advertising-Signale,
- Auswerten der Anzahl an Advertising-Signalen, ausgesendet durch unterschiedliche weitere mobile Endgeräte (102, 202.1, 202.2),
- Auswerten des originalen Zeitstempels der mindestens einen erhaltenen Advertising-Nachricht,
- Auswerten des mindestens einen Sensorflags,
- Auswerten der mindestens einen durch ein Backendsystem (242) und/oder eine Inspektionsvorrichtung verifizierten Nutzungsinformation.

6. Verfahren nach einem der vorherigen Ansprüche, **dadurch gekennzeichnet, dass**
- der erhaltene Nutzungsdatensatz mindestens ein von einem Sensorelement (118, 120, 122, 124, 126, 128) des mobilen Endgeräts (102, 202.1, 202.2) erhaltener Sensordatensatz des mobilen Endgeräts (102, 202.1, 202.2) ist, und
- der mindestens eine erhaltene Sensordatensatz:
- eine an einer Mobilfunkschnittstelle (122) des mobilen Endgeräts (102, 202.1, 202.2) erfasste Signalstärke eines Mobilfunknetzes ist, und/oder
- eine durch einen Positionssensor (124) des mobilen Endgeräts (102, 202.1, 202.2) erfasste geographische Position ist, und/oder
- eine an einer Nahfeldschnittstelle (118, 120) des mobilen Endgeräts (102, 202.1, 202.2) erfasste Signalstärke eines Nahfeldes ist, und/oder
- eine durch einen Beschleunigungssensor (126) des mobilen Endgeräts (102, 202.1, 202.2) erfasste Beschleunigung ist, und/oder
- eine durch einen Geschwindigkeitssensor (128) des mobilen Endgeräts (102, 202.1, 202.2) erfasste Geschwindigkeit ist.

7. Verfahren nach einem der vorherigen Ansprüche, **dadurch gekennzeichnet, dass**
- der mindestens eine erhaltene Nutzungsdatensatz eine Nutzungszeitdauer ist, die angibt, wie lange sich die Dienstleistungsanwendung (100, 200.1, 200.2) bereits in dem Basis-Nutzungszustand befindet,
- das mindestens eine Verifizierungsreferenzkriterium eine vorgegebene Mindestzeitdauer ist, und
- das Bestimmen des verifizierten Nutzungszustands ein Detektieren eines Überschreitens der vorgegebenen Mindestzeitdauer durch die Nutzungszeitdauer umfasst.

8. Verfahren nach einem der vorherigen Ansprüche, **dadurch gekennzeichnet, dass**
- der mindestens eine erhaltene Nutzungsdatensatz eine von einem Backendsystem (242) verifizierte Nutzungsinformation und/oder eine von einer Inspektionsvorrichtung verifizierte Nutzungsinformation ist,
- das mindestens ein Verifizierungsreferenzkriterium ein Vorliegen einer verifizierten Nutzungsinformation ist, und
- das Bestimmen des verifizierten Nutzungszustands ein Detektieren eines Vorliegens der verifizierten Nutzungsinformation umfasst.

9. Verfahren nach einem der vorherigen Ansprüche, **dadurch gekennzeichnet, dass**
- der mindestens eine erhaltene Nutzungsdatensatz ein von einem Sensorelement (118, 120, 122, 124, 126, 128) des mobilen Endgeräts (102, 202.1, 202.2) erhaltenes Sensordatum des mobilen Endgeräts (102, 202.1, 202.2) ist,
- das Auswerten des mindestens einen erhaltenen Sensordatums ein Vergleichen des mindestens einen Sensordatum mit einem zugehörigen und vorgegebenen Verifizierungsparameterbereich als Verifizierungsreferenzkriterium umfasst,
- wobei der verifizierte Nutzungszustand detektiert wird, wenn das erhaltene Sensordatum innerhalb des Verifizierungsparameterbereichs liegt.

10. Verfahren nach einem der vorherigen Ansprüche, **dadurch gekennzeichnet, dass** das Verfahren umfasst:
- Erhalten einer Mehrzahl von zeitabhängigen Sensordaten, umfassend zumindest eine Mobilfunksignalstärke und ein Positionssignal,
- wobei das Auswerten das Detektieren eines Abfallens der Mehrzahl von zeitabhängigen Sensordaten auf im Wesentlichen null umfasst, und
- das mindestens eine Verifizierungsreferenzkriterium ein Abfallen der Mehrzahl von zeitabhängigen Sensordaten auf im Wesentlichen null ist.

11. Verfahren nach einem der vorherigen Ansprüche, **dadurch gekennzeichnet, dass** das Verfahren umfasst:
- Bewirken, durch das erste Sendemodul (104), eines Aussendens eines weiteren Advertising-Signals mit einer weiteren Advertising-Nachricht, bei einem Empfang einer ersten Advertising-Nachricht,
- wobei die weitere Advertising-Nachricht zumindest teilweise auf der ersten Advertising-Nachricht basiert.

12. Dienstleistungsanwendung (100, 200.1, 200.2), insbesondere in Form einer durch einen Prozessor (130) eines mobilen Endgeräts (102, 202.1, 202.2) ausführbaren Softwareanwendung (100, 200.1, 200.2), zur Installation auf einem mobilen Endgerät (102, 202.1, 202.2), wobei die Dienstleistungsanwendung (100, 200.1, 200.2) eingerichtet ist, das Verfahren nach einem der vorherigen Ansprüche durchzuführen, umfassend:
- mindestens ein Empfangsmodul (104), eingerichtet zum Erhalten mindestens eines Nutzungsdatensatzes,
- mindestens ein Verifizierungsmodul (106) eingerichtet zum Bestimmen eines verifizierten Nutzungszustands in einem Basis-Nutzungszustand der Dienstleistungsanwendung (100, 200.1, 200.2), basierend auf dem mindestens einen erhaltenen Nutzungsdatensatz und mindestens einem vorgegebenen Verifizierungsreferenzkriterium, und
- mindestens ein erstes Sendemodul (108) eingerichtet zum Aussenden, durch das mobile Endgerät (102, 202.1, 202.2), eines Advertising-Signals mit einer Advertising-Nachricht, wenn ein verifizierter Nutzungszustand bestimmt wurde, wobei die Advertising-Nachricht anzeigt, dass die Dienstleistungsanwendung einen verifizierten Nutzungszustand bestimmt hat.

13. Dienstleistungssystem (240), insbesondere Transportsystem (240), umfassend:
- mindestens ein mobiles Endgerät (102, 202.1, 202.2) mit einer installierten Dienstleistungsanwendung (100, 200.1, 200.2) nach Anspruch 12, und
- mindestens ein Backendsystem (242).

## Claims

1. Method for operating a service application (100, 200.1, 200.2) installed on a mobile terminal (102, 202.1, 202.2) for the utilization of a service, in particular a transport service, comprising:
- obtaining, by a receiving module (104) of the service application (100, 200.1, 200.2), at least one usage record,
- determining, in a base usage state of the service application (100, 200.1, 200.2), by a verification module (106) of the service application (100, 200.1, 200.2), a verified usage state based on the at least one received usage data set and at least one predetermined verification reference criterion, wherein the base usage state is a system be-in state, and
- when a verified usage state has been determined, causing, by a first transmitting module (108) of the service application (100, 200.1, 200.2), transmission by the mobile terminal (102, 202.1, 202.2) of an advertising signal with an advertising message, the advertising message indicating that the service application has determined a verified usage state,
- generating, by a generation module (112) of the service application (100, 200.1, 200.2), at least one usage log record during at least the base usage state about the usage of a service,
- causing, by a second transmitting module (114) of the service application (100, 200.1, 200.2), a mobile terminal (102, 202.1, 202.2) to transmit a usage log message containing the at least one generated usage log data set to a backend system (242),
- receiving, by at least one receiving module (244) of the backend system (242), a plurality of usage log messages from a plurality of mobile terminals (102, 202.1, 202.2),
- determining, by at least one evaluation module (246) of the backend system (242), a first trip chain for a first mobile terminal (102, 202.1, 202.2) having a verified usage state based on at least a first usage log message from the first mobile terminal (102, 202.1, 202.2),
- determining, by the at least one evaluation module (246) of the backend system (242), a second trip chain for a second mobile terminal (102, 202.1, 202.2) having a non-verified usage state based on at least a second usage log message of the second mobile terminal (102, 202.1, 202.2) including at least a second usage log record,
wherein the generation module (112) of the service application (100, 200.1, 200.2) of the second mobile terminal (102, 202.1, 202.2) generates the at least one second usage log record only after the second mobile terminal (102, 202.1, 202.2) has received at least one advertising message from the first mobile terminal (102, 202.1, 202.2).

2. Method according to claim 1, **characterized in that**
- the advertising message comprises at least one of the following advertising parameters:
- at least one user identifier,
- at least one service operator identifier,
- at least one timestamp,
- at least one sequence number,
- at least one historical date of the advertising signal,
- at least one sensor flag identifying at least one sensor element (118, 120, 122, 124, 126, 128) of the mobile terminal (102, 202.1, 202.2) emitting the advertising signal,
- usage information verified by a backend system (242) and/or an inspection device.

3. Method according to any one of the preceding claims, **characterized in that** the method comprises:
- detecting, by a detection module (110) of the service application (100, 200.1, 200.2), a presence of the mobile terminal (102, 202.1, 202.2) in a service space (248, 548, 648.1, 648.2) in a detection step; and
- setting the service application (100, 200.1, 200.2) to the basic use state when the presence of the mobile terminal (102, 202.1, 202.2) in the service space (248, 548, 648.1, 648.2) is detected
- wherein the detection step is performed in particular at specific times, in particular preferably on a regular basis.

4. Method according to any one of the previous claims, **characterized in that**
- detecting the presence of the mobile terminal (102, 202.1, 202.2) in the service space (248, 548, 648.1, 648.2) comprises receiving at least one advertising signal emitted by a further mobile terminal (102, 202.1, 202.2) with an advertising message.

5. Method according to claim 4, **characterized in that**
- in the detecting step, detecting the presence of the mobile terminal (102, 202.1, 202.2) in the service space (248, 548, 648.1, 648.2) comprises evaluating the at least one received advertising signal by performing at least one of the evaluating steps, from the group comprising:
- evaluating the number of advertising signals received from the same further mobile terminal (102, 202.1, 202.2),
- evaluating the number of advertising signals emitted by different further mobile terminals (102, 202.1, 202.2),
- evaluating the original timestamp of the at least one received advertising message,
- evaluating the at least one sensor flag,
- evaluating the at least one usage information verified by a backend system (242) and/or an inspection device.

6. Method according to any one of the previous claims, **characterized in that**
- the obtained usage data set is at least one sensor data set of the mobile terminal (102, 202.1, 202.2) obtained from a sensor element (118, 120, 122, 124, 126, 128) of the mobile terminal (102, 202.1, 202.2), and
- the at least one obtained sensor data set:
- is a signal strength of a mobile network detected at a mobile network interface (122) of the mobile terminal (102, 202.1, 202.2), and/or
- is a geographical position detected by a position sensor (124) of the mobile terminal (102, 202.1, 202.2), and/or
- is a signal strength of a near field detected at a near field interface (118, 120) of the mobile terminal (102, 202.1, 202.2), and/or
- is an acceleration detected by an acceleration sensor (126) of the mobile terminal (102, 202.1, 202.2), and/or
- is a speed detected by a speed sensor (128) of the mobile terminal (102, 202.1, 202.2).

7. Method according to any one of the previous claims, **characterized in that**
- the at least one obtained usage record is a usage time duration indicating how long the service application (100, 200.1, 200.2) has been in the base usage state,
- the at least one verification reference criterion is a predetermined minimum time duration, and
- determining the verified usage state comprises detecting an exceeding of the predetermined minimum time duration by the usage time duration.

8. Method according to any one of the preceding claims, **characterized in that**
- the at least one obtained usage record is usage information verified by a backend system (242) and/or usage information verified by an inspection device,
- the at least one verification reference criterion is a presence of verified usage information, and
- determining the verified usage state comprises detecting a presence of the verified usage information.

9. Method according to any one of the preceding claims, **characterized in that**
- the at least one obtained usage record is a sensor record of the mobile terminal (102, 202.1, 202.2) obtained from a sensor element (118, 120, 122, 124, 126, 128) of the mobile terminal (102, 202.1, 202.2),
- evaluating the at least one obtained sensor data comprises comparing the at least one sensor data with an associated and predetermined verification parameter range as a verification reference criterion,
- wherein the verified usage state is detected if the obtained sensor datum is within the verification parameter range.

10. A method according to any one of the preceding claims, **characterized in that** the method comprises:
- obtaining a plurality of time-dependent sensor data comprising at least a mobile signal strength and a position signal,
- wherein evaluating comprises detecting a drop of the plurality of time-dependent sensor data to substantially zero, and
- the at least one verification reference criterion is a dropping of the plurality of time-dependent sensor data to substantially zero.

11. A method according to any one of the preceding claims, **characterized in that** the method comprises:
- causing, by the first transmitter module (104), a transmission of a further advertising signal comprising a further advertising message, upon a reception of a first advertising message,
- wherein the further advertising message is based at least in part on the first advertising message.

12. Service application (100, 200.1, 200.2), in particular in the form of a software application (100, 200.1, 200.2) executable by a processor (130) of a mobile terminal (102, 202.1, 202.2), for installation on a mobile terminal (102, 202.1, 202.2), wherein the service application (100, 200.1, 200.2) is set up to perform the method according to one of the previous claims, comprising:
- at least one receiving module (104) adapted to obtain at least one usage record,
- at least one verification module (106) adapted to determine a verified usage state in a base usage state of the service application (100, 200.1, 200.2) based on the at least one obtained usage data set and at least one predetermined verification reference criterion; and
- at least a first transmitting module (108) adapted to transmit, by the mobile terminal (102, 202.1, 202.2), an advertising signal including an advertising message when a verified usage state has been determined, the advertising message indicating that the service application has determined a verified usage state.

13. Service system (240), in particular transportation system (240), comprising:
- at least one mobile terminal (102, 202.1, 202.2) with an installed service application (100, 200.1, 200.2) according to claim 12, and
- at least one backend system (242).

## Revendications

1. Procédé d'exploitation d'une application de service (100, 200.1, 200.2) installée sur un terminal mobile (102, 202.1, 202.2) pour l'utilisation d'un service, en particulier d'un service de transport, comprenant :
- obtenir, par un module de réception (104) de l'application de service (100, 200.1, 200.2), au moins un ensemble de données d'utilisation,
- déterminer, dans un état d'utilisation de base de l'application de service (100, 200.1, 200.2), par un module de vérification (106) de l'application de service (100, 200.1, 200.2), un état d'utilisation vérifié, sur la base de l'au moins un ensemble de données d'utilisation obtenu et d'au moins un critère de référence de vérification prédéterminé, où l'état d'utilisation de base est un état system-be-in, et
- lorsqu'un état d'utilisation vérifié a été déterminé, effectuer, par un premier module de transmission (108) de l'application de service (100, 200.1, 200.2), l'émission, par le terminal mobile (102, 202.1, 202.2), d'un signal d'advertising avec un message d'advertising, où le message d'advertising indique que l'application de service a déterminé un état d'utilisation vérifié,
- générer, par un module de génération (112) de l'application de service (100, 200.1, 200.2), au moins un ensemble de données de protocole d'utilisation au moins pendant l'état d'utilisation de base sur l'utilisation d'un service,
- effectuer, par un deuxième module d'émission (114) de l'application de service (100, 200.1, 200.2), une émission, par le terminal mobile (102, 202.1, 202.2), d'un message de protocole d'utilisation, contenant l'au moins un ensemble de données de protocole d'utilisation généré, vers un système backend (242),
- recevoir, par au moins un module de réception (244) du système backend (242), une pluralité de messages de protocole d'utilisation d'une pluralité de terminaux mobiles (102, 202.1, 202.2),
- déterminer, par au moins un module d'évaluation (246) du système backend (242), une première chaîne de trajets pour un premier terminal mobile (102, 202.1, 202.2) qui a un état d'utilisation vérifié, sur la base d'au moins un premier message de protocole d'utilisation du premier terminal mobile (102, 202.1, 202.2),
- déterminer, par l'au moins un module d'évaluation (246) du système backend (242), une deuxième chaîne de trajets pour un deuxième terminal mobile (102, 202.1, 202.2) qui a un état d'utilisation non vérifié, sur la base d'au moins un deuxième message de protocole d'utilisation du deuxième terminal mobile (102, 202.1, 202.2) contenant au moins un deuxième ensemble de données de protocole d'utilisation,
où le module de génération (112) de l'application de service (100, 200.1, 200.2) du deuxième terminal mobile (102, 202.1, 202.2) ne génère l'au moins un deuxième ensemble de données de protocole d'utilisation que lorsque le deuxième terminal mobile (102, 202.1, 202.2) a reçu, du premier terminal mobile (102, 202.1, 202.2), au moins un message d'advertising.

2. Procédé selon la revendication 1, **caractérisé en ce que**
- le message d'advertising comprend au moins un des paramètres d'advertising suivants :
- au moins un identifiant d'utilisateur,
- au moins un identifiant d'opérateur de services,
- au moins un horodatage,
- au moins un numéro de séquence,
- au moins une date historique du signal d'adveristing,
- au moins un drapeau de capteur, caractérisant au moins un élément de capteur (118, 120, 122, 124, 126, 128) du terminal mobile (102, 202.1, 202.2) émettant le signal d'advertising,
- une information d'utilisation vérifiée par un système backend (242) et/ou par un dispositif d'inspection.

3. Procédé selon l'une des revendications précédentes, **caractérisé en ce que** le procédé comprend :
- détecter, par un module de détection (110) de l'application de service (100, 200.1, 200.2), une présence du terminal mobile (102, 202.1, 202.2) dans un espace de service (248, 548, 648.1, 648.2) lors d'une étape de détection, et
- mettre l'application de service (100, 200.1, 200.2) dans l'état d'utilisation de base lorsque la présence du terminal mobile (102, 202.1, 202.2) dans l'espace de service (248, 548, 648.1, 648.2) est détectée
- où l'étape de détection est notamment effectuée à des instants déterminés, de préférence régulièrement.

4. Procédé selon l'une des revendications précédentes, **caractérisé en ce que**
- la détection de la présence du terminal mobile (102, 202.1, 202.2) dans l'espace de service (248, 548, 648.1, 648.2) comprend une réception d'au moins un signal publicitaire émis par un autre terminal mobile (102, 202.1, 202.2) comprenant un message publicitaire.

5. Procédé selon la revendication 4, **caractérisé en ce que**
- dans l'étape de détection, une détection de la présence du terminal mobile (102, 202.1, 202.2) dans l'espace de service (248, 548, 648.1, 648.2) comprend une évaluation du au moins un signal d'advertising reçu en effectuant au moins une des étapes d'évaluation parmi le groupe comprenant :
- l'évaluation du nombre de signaux d'advertising reçus par le même autre terminal mobile (102, 202.1, 202.2),
- évaluer le nombre de signaux d'advertising émis par différents autres terminaux mobiles (102, 202.1, 202.2),
- évaluer l'horodatage original de l'au moins un message d'advertising reçu,
- évaluation de l'au moins un drapeau de capteur,
- exploitation de la au moins une information d'utilisation vérifiée par un système backend (242) et/ou un dispositif d'inspection.

6. Procédé selon l'une des revendications précédentes, **caractérisé en ce que**
- l'ensemble de données d'utilisation obtenu est au moins un ensemble de données de capteur du terminal mobile (102, 202.1, 202.2) obtenu par un élément capteur (118, 120, 122, 124, 126, 128) du terminal mobile (102, 202.1, 202.2), et
- l'au moins un ensemble de données de capteur obtenu :
- est une intensité de signal d'un réseau mobile détectée sur une interface de communications mobiles (122) du terminal mobile (102, 202.1, 202.2), et/ou
- est une position géographique détectée par un capteur de position (124) du terminal mobile (102, 202.1, 202.2), et/ou
- est une intensité de signal d'un champ proche détectée sur une interface de champ proche (118, 120) du terminal mobile (102, 202.1, 202.2), et/ou
- est une accélération détectée par un capteur d'accélération (126) du terminal mobile (102, 202.1, 202.2), et/ou
- est une vitesse détectée par un capteur de vitesse (128) du terminal mobile (102, 202.1, 202.2).

7. Procédé selon l'une des revendications précédentes, **caractérisé en ce que**
- l'au moins un ensemble de données d'utilisation obtenue est une durée d'utilisation indiquant depuis combien de temps l'application de service (100, 200.1, 200.2) se trouve déjà dans l'état d'utilisation de base,
- le au moins un critère de référence de vérification est une durée minimale prédéterminée, et
- la détermination de l'état d'utilisation vérifié comprend une détection d'un dépassement de la durée minimale prédéterminée par la durée d'utilisation.

8. Procédé selon l'une des revendications précédentes, **caractérisé en ce que**
- le au moins un ensemble de données d'utilisation obtenu est une information d'utilisation vérifiée par un système backend (242) et/ou une information d'utilisation vérifiée par un dispositif d'inspection,
- le au moins un critère de référence de vérification est une présence d'informations d'utilisation vérifiées, et
- la détermination de l'état d'utilisation vérifié comprend la détection de la présence des informations d'utilisation vérifiées.

9. Procédé selon l'une des revendications précédentes, **caractérisé en ce que**
- l'au moins un ensemble de données d'utilisation obtenu est une donnée de capteur du terminal mobile (102, 202.1, 202.2) obtenue par un élément de capteur (118, 120, 122, 124, 126, 128) du terminal mobile (102, 202.1, 202.2),
- l'évaluation de la au moins une donnée de capteur reçue comprend une comparaison de la au moins une donnée de capteur avec une plage de paramètres de vérification associée et prédéfinie comme critère de référence de vérification,
- où l'état d'utilisation vérifié est détecté si la donnée de capteur obtenue est dans la plage de paramètres de vérification.

10. Procédé selon l'une des revendications précédentes, **caractérisé en ce que** le procédé comprend :
- obtenir une pluralité de données de capteur dépendant du temps, comprenant au moins une intensité de signal de communications mobiles et un signal de position,
- où l'évaluation comprend la détection d'une chute de la pluralité de données de capteur dépendantes du temps à essentiellement zéro, et
- le au moins un critère de référence de vérification est une chute de la pluralité de données de capteur dépendant du temps à essentiellement zéro.

11. Procédé selon l'une des revendications précédentes, **caractérisé en ce que** le procédé comprend :
- effectuer, par le premier module d'émission (104), une émission d'un autre signal d'advertisement comprenant un autre message d'advertisement, lors de la réception d'un premier message d'advertisement,
- où l'autre message d'advertisement est basé au moins en partie sur le premier message d'advertisement.

12. Application de service (100, 200.1, 200.2), en particulier sous la forme d'une application logicielle (100, 200.1, 200.2) exécutable par un processeur (130) d'un terminal mobile (102, 202.1, 202.2), pour l'installation sur un terminal mobile (102, 202.1, 202.2), où l'application de service (100, 200.1, 200.2) est configurée pour faire exécuter le procédé selon l'une des revendications précédentes, comprenant :
- au moins un module de réception (104), configuré pour obtenir au moins un ensemble de données d'utilisation,
- au moins un module de vérification (106) configuré pour déterminer un état d'utilisation vérifié dans un état d'utilisation de base de l'application de service (100, 200.1, 200.2), sur la base du au moins un ensemble de données d'utilisation obtenu et d'au moins un critère de référence de vérification prédéterminé, et
- au moins un premier module d'émission (108) configuré pour émettre, par le terminal mobile (102, 202.1, 202.2), un signal d'advertising avec un message d'advertising lorsqu'un état d'utilisation vérifié a été déterminé, où le message d'advertising indique que l'application de service a déterminé un état d'utilisation vérifié.

13. Système de service (240), en particulier système de transport (240), comprenant:
- au moins un terminal mobile (102, 202.1, 202.2) avec une application de service (100, 200.1, 200.2) installée selon la revendication 12, et
- au moins un système backend (242).
